(19) Europäisches Patentamt / European Patent Office / Office européen des brevets

(11) **EP 2 368 134 B1**

(12) **FASCICULE DE BREVET EUROPEEN**

(45) Date de publication et mention
de la délivrance du brevet:
**26.02.2014 Bulletin 2014/09**

(21) Numéro de dépôt: **09795415.0**

(22) Date de dépôt: **17.12.2009**

(51) Int Cl.:
***G01S 7/292*** *(2006.01)*  ***H04B 1/7163*** *(2011.01)*

(86) Numéro de dépôt international:
**PCT/EP2009/067394**

(87) Numéro de publication internationale:
**WO 2010/070041 (24.06.2010 Gazette 2010/25)**

(54) **CIRCUIT INTEGRATEUR À MULTIFENETRAGE TEMPOREL**

INTEGRATORSCHALTUNG MIT MEHRFACH-ZEITFENSTER-FUNKTIONEN

INTEGRATOR CIRCUIT WITH MULTIPLE TIME WINDOW FUNCTIONS

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **17.12.2008 FR 0858724**

(43) Date de publication de la demande:
**28.09.2011 Bulletin 2011/39**

(73) Titulaire: **Commissariat à l'Énergie Atomique
et aux Énergies Alternatives
75015 Paris (FR)**

(72) Inventeur: **MASSON, Gilles
38140 Renage (FR)**

(74) Mandataire: **Ilgart, Jean-Christophe et al
BREVALEX
95, rue d'Amsterdam
75378 Paris Cedex 8 (FR)**

(56) Documents cités:
**EP-A1- 1 643 656       US-A1- 2001 033 607
US-A1- 2002 172 170     US-B2- 7 242 461**

**Description**

**DOMAINE TECHNIQUE**

La présente invention concerne le domaine des circuits intégrateurs à multifenêtrage temporel. Elle trouve notamment application dans les systèmes de télécommunication UWB de type impulsionnel et les systèmes radar à ondes pulsées.

**ÉTAT DE LA TECHNIQUE ANTÉRIEURE**

Les systèmes de télécommunication ultra-large bande ou UWB *(Ultra Wide Band)* de type impulsionnel sont bien connus de l'état de la technique. Dans un tel système, un symbole émis par ou à destination d'un utilisateur donné est transmis à l'aide d'une séquence d'impulsions ultra-courtes, de l'ordre de la nanoseconde ou de la centaine de picosecondes.

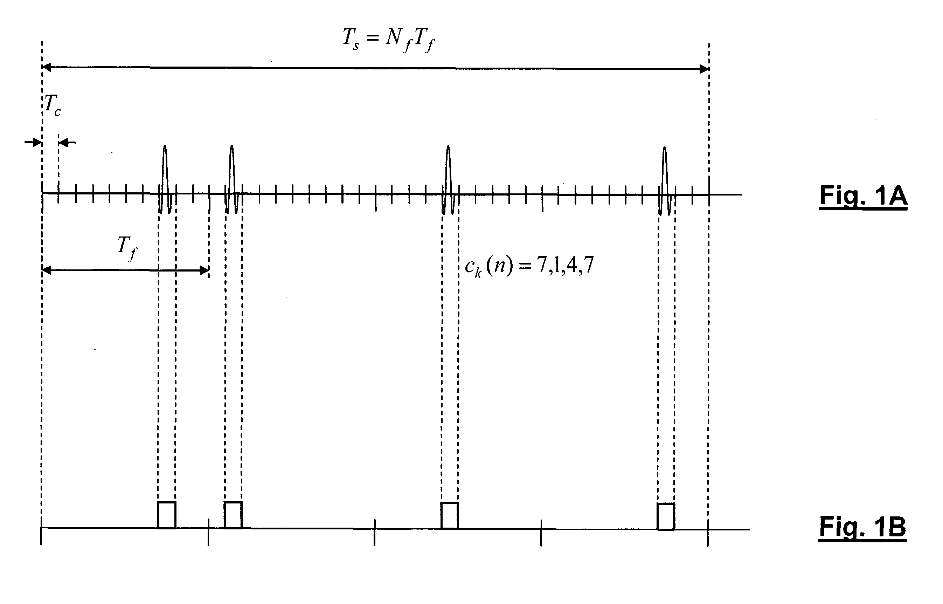

La Fig. 1 illustre schématiquement le signal d'un utilisateur correspondant à un symbole d'information donné. Ce signal est constitué d'une séquence temporelle de $N_f$ trames, chaque trame étant elle-même divisée en $N_c$ intervalles élémentaires encore dénommés temps bribe ou temps chip.

Le signal de base relatif à un utilisateur $k$ , dit signal TH-UWB *(Time Hopped UWB)* peut s'exprimer de manière générale par :

$$s_k(t) = \sum_{n=0}^{N_f-1} p(t - nT_f - c_k(n)T_c) \qquad (1)$$

où $p(t)$ est la forme de l'impulsion élémentaire, $T_c$ est une durée bribe (ou chip), $T_f$ est la durée d'une trame avec $N_f = N_c T_c$ où $N_c$ est le nombre de chips dans un intervalle, la séquence temporelle étant de durée totale $T_s = N_f T_f$ où $N_f$ est le nombre de trames dans la séquence. La durée $\tau$ de l'impulsion élémentaire est choisie inférieure à la durée chip. La séquence $c_k(n)$ pour $n=0,..,N_s-1$ définit le code de sauts temporels de l'utilisateur $k$. Les séquences de sauts temporels sont choisies de manière à minimiser le nombre de collisions entre impulsions appartenant à des séquences de saut temporel relatives à des utilisateurs différents.

Du coté de l'émetteur, le signal de base de l'utilisateur est modulé par le symbole d'information, par exemple à l'aide d'une modulation de position (PPM pour *Pulse Position Modulation*) :

$$s_k(t) = \sum_{n=0}^{N_f-1} p(t - nT_f - c_k(n)T_c - m\varepsilon) \qquad (2)$$

où $\varepsilon$ est un retard de modulation sensiblement inférieur à la durée chip $T_c$ et $m=0,..,M-1$ est la position $M$-aire PPM.

Du côté du récepteur, le signal reçu fait l'objet d'une intégration à multifenêtrage temporel. Les positions des fenêtres temporelles sont fonction de l'utilisateur que l'on souhaite recevoir. La Fig. 1B représente le signal de multifenêtrage temporel associé à l'utilisateur $k$. Les fenêtres temporelles sont ici calées sur les positions des sauts temporels $c_k(n)$.

De manière générale, pour un utilisateur $k$ donné, si l'on fait abstraction du retard de propagation, le récepteur effectue une intégration dans certaines fenêtres temporelles du signal reçu $r_k(t)$, soit dans les fenêtres temporelles:

$w(t-nT_f-c_k(n)T_c)$,     $n=0,..,N_f-1$     pour     la     première     position     de     modulation,     soit

$$I_0^k = \int r_k(t)\, w(t - nT_f - c_k(n)T_c)\, dt \text{ ,}$$

$w(t-nT_f-c_k(n)T_c-m\varepsilon)$,     $n=0,..,N_f-1$     pour     la     $(m+1)^{\text{ième}}$     position     de     modulation,     soit

$$I_m^k = \int r_k(t)\, w(t - nT_f - c_k(n)T_c - m\varepsilon)\, dt \text{ ,}$$

$w(t-nT_f-c_k(n)T_c-(M-1)\varepsilon)$, $n=0,..,N_f-1$ pour la dernière position de modulation, soit :

$$I^k_{M-1} = \int r_k(t) w(t - nT_f - c_k(n)T_c - (M-1)\varepsilon)dt \ ,$$

où $w(t)$ est une fonction à support borné de largeur légèrement supérieure à la durée $\tau$ de l'impulsion $p(t)$.

Le récepteur estime la position de modulation et donc le symbole d'information transmis, en comparant les valeurs intégrées $I^k_m$, soit :

$$\hat{m} = \arg\max_m \left( I^k_m \right) \qquad\qquad (3)$$

Par intégration à multifenêtrage temporel d'un signal $r(t)$, on entendra de manière générale une opération d'intégration cohérente sur une pluralité $N$ de fenêtres temporelles disjointes :

$$I_s = \int r(t) \sum_{n=0}^{N-1} w_n(t)dt \qquad\qquad (4)$$

où $w_n(t)$, $n=0,..,N-1$, sont des fonctions à supports bornés et disjoints. On notera que dans l'exemple précité chacune des valeurs $I^k_m$, $m=0,..,M-1$ est obtenue par une intégration à multifenêtrage temporel sur $N_f$ fenêtres.

L'intégration à multifenêtrage temporel est également utilisée dans les récepteurs radar à ondes pulsées. En effet, pour déterminer si une cible est présente dans un intervalle de distance *(range bin)* donné, le récepteur intègre le signal reçu, le cas échéant après l'avoir démodulé, dans une fenêtre temporelle. Afin d'améliorer le rapport signal sur bruit, il est connu d'intégrer le signal radar reçu de manière cohérente dans une pluralité de fenêtres temporelles espacées de la période de récurrence du radar 1/*PRF*, où *PRF (Pulse Recurrence Frequency)* est la fréquence de récurrence du radar.

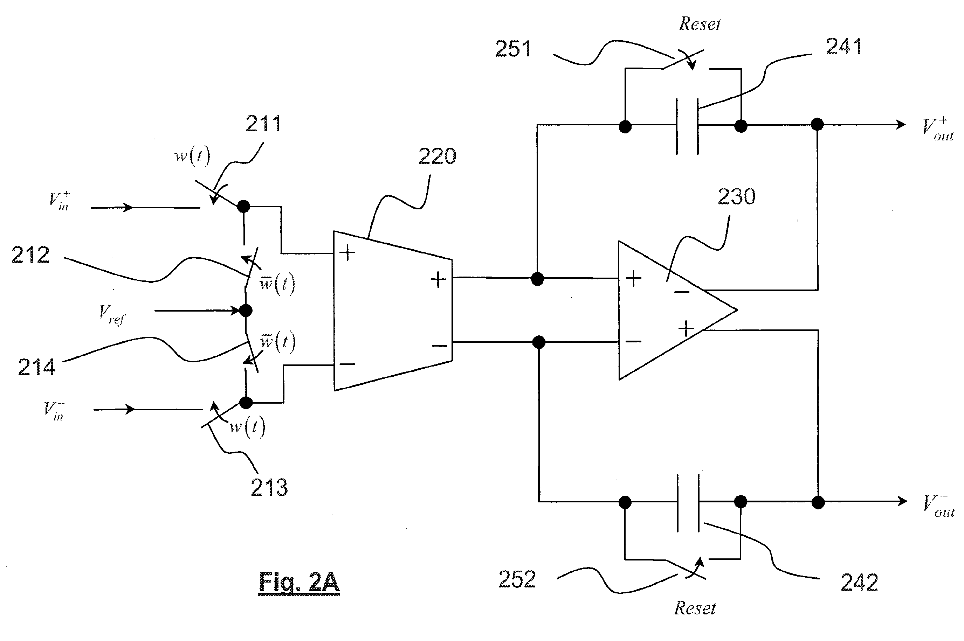

Un premier exemple connu de circuit intégrateur à multifenêtrage temporel est représenté en Fig. 2A.

Un tel circuit est par exemple divulgué dans le document US 2001/0033607 A1.

Le circuit 200 comprend une pluralité de commutateurs de fenêtrage 211, 212, 213, 214, un module de conversion tension/courant, 220, encore appelé bloc de transconductance, transformant la tension différentielle d'entrée en un courant proportionnel, un amplificateur opérationnel 230, deux capacités d'intégration 241 et 242, montées en contre-réaction entre les sorties et les entrées différentielles de l'ampli-op. Le signal intégré apparaît sous forme différentielle entre les sorties $V^+_{out}$ et $V^-_{out}$ du circuit intégrateur. Deux commutateurs 251 et 252, montés respectivement en parallèle sur les deux capacités d'intégration 241 et 242, assurent la remise à zéro de l'intégrateur.

Le signal de tension à intégrer est appliqué de manière différentielle entre les entrées $V^+_{in}$ et $V^-_{in}$ du circuit intégrateur. Ce signal est commuté par les commutateurs 211 et 213, par un signal logique de multifenêtrage

$w(t) = \sum_{n=0}^{N-1} w_n(t)$ vers les entrées différentielles du module de transconductance 220.

Un exemple de signal logique de multifenêtrage $w(t)$ a déjà été représenté en Fig. 1B. Chaque fenêtre temporelle $w_n(t)$ est à support borné $A_n$, par exemple $w_n(t)=1$ si $t \in A_n$ et $w_n(t)=0$ sinon. Les supports temporels $A_n$ sont disjoints et sont distribués temporellement de manière uniforme (exemple du récepteur radar précité) ou non uniforme (exemple du récepteur TH-UWB précité).

Le signal logique complémentaire $\overline{w}(t)$ commute les entrées du module de transconductance sur une même tension de référence $V_{ref}$. Ainsi, à l'extérieur des fenêtres $w_n(t)$, on s'assure qu'une tension différentielle nulle est appliquée à l'entrée du module 220. Les capacités 241 et 242 intègrent les courants de sortie du module 220. Les tensions de sortie $V_{out}^+$ et $V_{out}^-$ sont telles qu'au terme du multi-fenêtrage, $V_{out}^+ - V_{out}^-$ représente une intégration cohérente du signal d'entrée sur les fenêtres $w_n(t)$, soit : $V_{out}^+ - V_{out}^- = \int \alpha \left( V_{in}^+ - V_{in}^- \right) w(t) dt$ où $\alpha$ est une constante qui dépend du circuit.

La valeur intégrée est remise à zéro en court-circuitant les capacités 241 et 242.

Le circuit intégrateur illustré en Fig. 2A présente une impédance de sortie élevée et de bonnes performances en termes de bande passante et de contrôle de gain.

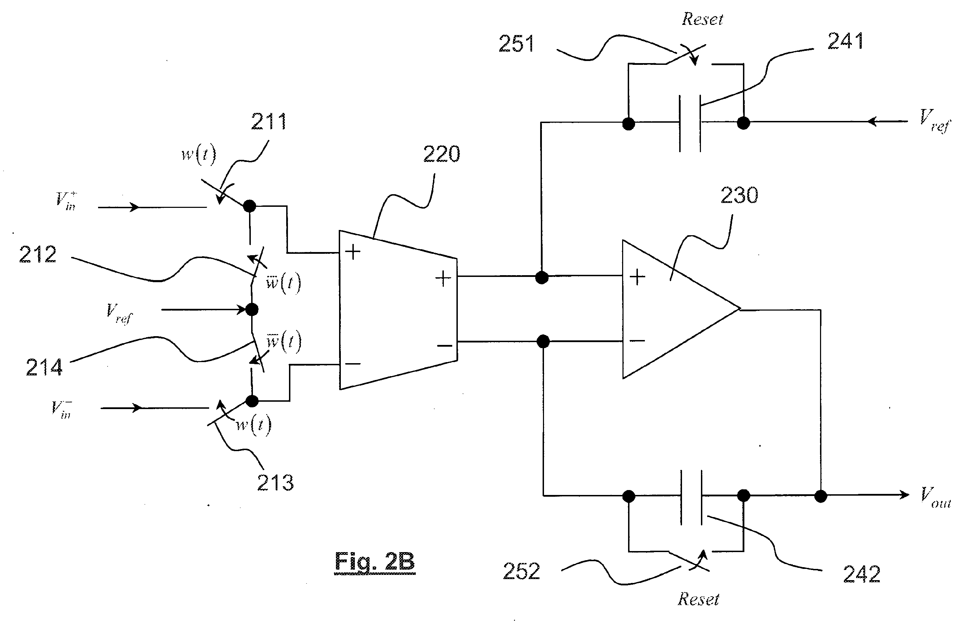

Un second exemple de circuit intégrateur à multifenêtrage temporel est représenté en Fig. 2B. Les éléments identiques portent les mêmes références qu'en Fig. 2A. A la différence du circuit de la Fig. 2A, le circuit intégrateur de la Fig. 2B présente une configuration de sortie unipolaire. Cette configuration permet de supprimer une boucle de contre-réaction de contrôle de mode commun et donc de réduire la consommation du circuit tout en augmentant sa bande passante. Pour conserver la symétrie du montage, notamment pour équilibrer les appels de courant lors des commutations, la capacité 241 est cependant conservée ainsi que son commutateur de remise à zéro associé 251.

Les circuits intégrateurs des Figs. 2A et 2B ne permettent pas d'effectuer en parallèle une pluralité d'opérations d'intégration à multifenêtrage. Par exemple, un tel circuit intégrateur ne permet pas d'obtenir en parallèle les valeurs $I_m^k$ correspondant aux différentes positions PPM, $m=0,..,M$-1 d'un système TH-UWB ou bien encore d'effectuer une intégration cohérente pour différents intervalles de distance dans un système radar à ondes pulsées.

Une première solution pour effectuer des opérations d'intégration en parallèle consisterait à prévoir autant de circuits intégrateurs que d'opérations d'intégration. Par exemple, dans le cas du système de télécommunication TH-UWB exposé plus haut, $M$ circuits intégrateurs pourraient fournir en parallèle les valeurs $I_m^k$ pour les $M$ positions de modulation, $m=0,..,M$-1. De manière similaire, $K$ circuits intégrateurs en parallèle peuvent fournir des résultats d'intégration pour $K$ utilisateurs distincts.

Cette solution n'est toutefois pas entièrement satisfaisante dans la mesure où les intégrateurs peuvent présenter une dispersion de leurs caractéristiques, par exemple du gain de transconductance du module 220 ou des valeurs de capacité de 241, 242, pouvant conduire à des constantes d'intégration $\alpha$ différentes et donc à des estimations erronées (par exemple à une estimation $\hat{m}$ erronée). En outre, la multiplication des intégrateurs entraîne une consommation de puissance plus importante.

Le problème à l'origine de l'invention est donc de proposer un circuit intégrateur à multifenêtrage temporel, capable d'effectuer une pluralité d'opérations d'intégration en parallèle, tout en garantissant une bonne précision et une faible consommation.

## EXPOSÉ DE L'INVENTION

La présente invention est définie par un circuit intégrateur à multifenêtrage temporel pour effectuer une pluralité d'opérations d'intégration en parallèle, chaque opération d'intégration étant effectuée de manière cohérente sur une séquence de fenêtres temporelles comprenant au moins une telle fenêtre, ledit circuit comprenant une pluralité de voies d'intégration correspondant chacune à une opération d'intégration. Lesdites voies d'intégration partagent un même convertisseur tension/courant et des mêmes premiers moyens de commutation pour commuter le signal à intégrer à l'entrée du dit convertisseur, chaque voie d'intégration comprenant en outre au moins une capacité d'intégration, montée en contre réaction sur un amplificateur opérationnel, et recevant le courant ainsi obtenu via des seconds moyens de commutation pour sélectionner ladite voie.

Avantageusement, le circuit intégrateur comprend en outre des troisièmes moyens de commutation adaptés à transférer la charge intégrée dans chaque capacité d'intégration vers une capacité de mémorisation correspondante, lorsque ladite pluralité d'opérations d'intégration est terminée.

Le circuit intégrateur peut également comprendre des quatrièmes moyens de commutation pour commuter les tensions aux bornes des dites capacités de mémorisation vers la sortie du circuit intégrateur, après que le transfert des charges des capacités d'intégration aux capacités de mémorisation correspondantes a été effectué.

De préférence, les premiers moyens de commutation sont commandés par un premier signal de commande obtenu par un OU logique de signaux de voie, chaque signal de voie présentant un niveau logique haut pendant les fenêtres temporelles de cette voie et un niveau logique bas en dehors de ces fenêtres.

Selon une première variante, ledit convertisseur a une entrée différentielle et les premiers moyens de commutation appliquent le signal à intégrer entre les bornes d'entrée du dit convertisseur lorsque le premier signal de commande est à un niveau logique haut et une tension de référence à chacune de ces bornes lorsque qu'il est à un niveau logique bas.

Selon une seconde variante, ledit convertisseur a une entrée unipolaire et les premiers moyens de commutation appliquent le signal à intégrer à la borne d'entrée du dit convertisseur, lorsque le premier signal de commande est à un niveau logique haut, et une tension de référence à cette borne lorsqu'il est à un niveau logique bas.

Selon un premier mode de réalisation, lesdites voies d'intégration partagent le même amplificateur opérationnel, les entrées du dit amplificateur étant respectivement reliées aux sorties du dit convertisseur, et chaque voie comprend une capacité de référence disposée entre une tension de référence et une première entrée de l'amplificateur opérationnel ainsi qu'une capacité d'intégration montée en contre-réaction entre la sortie de l'amplificateur opérationnel et sa seconde entrée.

Les seconds moyens de commutation sont alors avantageusement commandés par un signal de sélection de voie,

et connectent, lorsque ce signal de sélection est à un niveau logique haut :

- une première borne de la capacité de référence à la tension de référence et la seconde borne de cette capacité à la première entrée de l'amplificateur opérationnel ;
- une première borne de la capacité d'intégration à la sortie de l'amplificateur opérationnel et la seconde borne de cette capacité à la seconde entrée de l'amplificateur opérationnel ;

et, lorsque le signal de sélection est à un niveau logique bas :

- déconnectent la première borne de la capacité de référence de la tension de référence et connectent la seconde borne de cette capacité à la tension de référence ;
- déconnectent la première borne de la capacité d'intégration de la sortie de l'amplificateur opérationnel et connectent la seconde borne de cette capacité à la tension de référence.

Le circuit intégrateur comprend avantageusement des moyens de remise à zéro adaptés à appliquer ladite tension de référence simultanément aux première et seconde bornes de la capacité de référence et aux première et seconde bornes de la capacité d'intégration lorsqu'une remise à zéro est effectuée.

Les capacités de mémorisation sont typiquement montées en parallèle en sortie de l'amplificateur opérationnel, chaque capacité de mémorisation ayant une première borne connectée à ladite sortie via les troisièmes moyens de commutation et une seconde borne connectée à ladite tension de référence. De préférence, lesdites premières bornes des capacités de mémorisation sont également reliées à la sortie du circuit intégrateur via les quatrièmes moyens de commutation.

Selon une variante du premier mode de réalisation, lesdites voies d'intégration partagent le même amplificateur opérationnel, les entrées du dit amplificateur étant respectivement reliées aux sorties du dit convertisseur, et chaque voie comprend une première capacité d'intégration disposée en contre-réaction entre une première sortie et une première entrée de l'amplificateur opérationnel ainsi qu'une seconde capacité d'intégration disposée en contre-réaction entre une seconde sortie et une seconde entrée de l'amplificateur opérationnel.

Les seconds moyens de commutation sont avantageusement commandés par un signal de sélection de voie, et connectent, lorsque ce signal de sélection est à un niveau logique haut :

- une première borne de la première capacité d'intégration à la première sortie de l'amplificateur opérationnel et la seconde borne de cette capacité à la première entrée de l'amplificateur opérationnel ;
- une première borne de la seconde capacité d'intégration à la seconde sortie de l'amplificateur opérationnel et la seconde borne de cette capacité à la seconde entrée de l'amplificateur opérationnel ; et

lorsque le signal de sélection est à un niveau logique bas :

- déconnectent la première borne de la première capacité d'intégration de la première sortie de l'amplificateur opérationnel et connectent la seconde borne de cette capacité à la tension de référence ;
- déconnectent la première borne de la seconde capacité d'intégration de la seconde sortie de l'amplificateur opérationnel et connectent la seconde borne de cette capacité à la tension de référence.

Le circuit intégrateur peut comprendre en outre des moyens de remise à zéro adaptés à appliquer ladite tension de référence simultanément aux première et seconde bornes de la première capacité d'intégration et aux première et seconde bornes de la seconde capacité d'intégration lorsqu'une remise à zéro est effectuée.

Typiquement, les capacités de mémorisation sont montées en parallèle entre la première et la seconde sorties de l'amplificateur opérationnel, chaque capacité de mémorisation ayant une première borne et une seconde borne connectées respectivement à la première et à la seconde sorties de l'amplificateur opérationnel via les troisièmes moyens de commutation. De préférence, lesdites premières bornes des capacités de mémorisation sont reliées à une première sortie du circuit intégrateur et lesdites secondes bornes des capacités de mémorisation sont reliées à une seconde sortie du circuit intégrateur, via les quatrièmes moyens de commutation.

Selon un second mode de réalisation, chaque voie d'intégration comprend un amplificateur opérationnel, les entrées du dit amplificateur étant respectivement reliées aux sorties du dit convertisseur via les seconds moyens de commutation, une capacité de référence disposée entre une tension de référence et une première entrée de l'amplificateur opérationnel ainsi qu'une capacité d'intégration disposée en contre-réaction entre la sortie de l'amplificateur opérationnel et sa seconde entrée.

Les seconds moyens de commutation sont alors avantageusement commandés par un signal de sélection de voie, et, pour chaque voie, ils connectent et déconnectent, respectivement lorsque ce signal de sélection est à un niveau logique haut et à un niveau bas, les sorties du convertisseur aux entrées de l'amplificateur opérationnel.

Le circuit intégrateur peut comprendre en outre des moyens de remise à zéro, adaptés à appliquer ladite tension de référence simultanément aux première et seconde bornes de la capacité de référence et aux première et seconde bornes de la capacité d'intégration, lorsqu'une remise à zéro est effectuée.

Typiquement le circuit intégrateur comprend, pour chaque voie, une capacité de mémorisation ayant une première borne connectée à la sortie de l'amplificateur opérationnel, via les troisièmes moyens de commutation, et une seconde borne connectée à ladite tension de référence. De préférence, ladite première borne de la capacité de mémorisation est également reliée à la sortie du circuit intégrateur via les quatrièmes moyens de commutation.

Selon une variante du deuxième mode de réalisation, chaque voie d'intégration comprend un amplificateur opérationnel, les entrées du dit amplificateur étant respectivement reliées aux sorties du dit convertisseur via les seconds moyens de commutation, une première capacité d'intégration montée en contre-réaction entre une première sortie et une première entrée de l'amplificateur opérationnel ainsi qu'une seconde capacité d'intégration montée en contre-réaction entre une seconde sortie de l'amplificateur opérationnel et sa seconde entrée.

Les seconds moyens de commutation sont avantageusement commandés par un signal de sélection de voie, et, pour chaque voie, ils connectent et déconnectent, respectivement lorsque ce signal de sélection est à un niveau logique haut et à un niveau bas, les sorties du convertisseur aux entrées de l'amplificateur opérationnel.

Le circuit intégrateur peut comprendre en outre, pour chaque voie, des moyens de remise à zéro, adaptés à appliquer ladite tension de référence simultanément aux première et seconde bornes de la première capacité d'intégration ainsi qu'aux première et seconde bornes de la seconde capacité d'intégration, lorsqu'une remise à zéro est effectuée.

Typiquement le circuit intégrateur comprend, pour chaque voie, une capacité de mémorisation ayant une première borne connectée à la première sortie de l'amplificateur opérationnel et une seconde borne connectée à sa seconde sortie, via les troisièmes moyens de commutation. De préférence, lesdites première et seconde bornes de la capacité de mémorisation sont également reliées via les quatrièmes moyens de commutation, respectivement à une première sortie et à une seconde sortie du circuit intégrateur.

Selon un troisième mode de réalisation, lesdites voies d'intégration sont réparties en une pluralité de sous-ensembles et les seconds moyens de commutation comprennent des seconds moyens de premier rang pour sélectionner un sous-ensemble de voies parmi ladite pluralité de sous-ensembles et des second moyens de second rang pour sélectionner une voie au sein d'un sous ensemble et,

chaque sous-ensemble de voies comprend un amplificateur opérationnel, les entrées du dit amplificateur étant respectivement reliées aux sorties du dit convertisseur via les second moyens de commutation de premier rang ;

les voies d'un sous-ensemble partagent l'amplificateur opérationnel relatif à ce sous-ensemble, chaque voie du dit sous-ensemble comprenant une capacité de référence disposée entre une tension de référence et une première entrée de cet amplificateur ainsi qu'une capacité d'intégration montée en contre-réaction entre la sortie de cet amplificateur et sa seconde entrée.

Selon une variante du troisième mode de réalisation, lesdites voies d'intégration sont réparties en une pluralité de sous-ensembles et les seconds moyens de commutation comprennent des seconds moyens de premier rang pour sélectionner un sous-ensemble de voies parmi ladite pluralité de sous-ensembles et des second moyens de second rang pour sélectionner une voie au sein d'un sous ensemble, et

chaque sous-ensemble de voies comprend un amplificateur opérationnel, les entrées du dit amplificateur étant respectivement reliées aux sorties du dit convertisseur via les second moyens de commutation de premier rang,

les voies d'un sous-ensemble partagent l'amplificateur opérationnel relatif à ce sous-ensemble, chaque voie du dit sous-ensemble comprenant une première capacité d'intégration montée en contre-réaction entre une première sortie et une première entrée de cet amplificateur ainsi qu'une seconde capacité d'intégration montée en contre-réaction entre une seconde sortie et sa seconde entrée.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1A représente un exemple de signal utilisateur dans un système de télécommunication UWB ;

la Fig. 1B représente un exemple de multifenêtrage temporel pour recevoir le signal utilisateur de la Fig. 1A ;

les Figs. 2A et 2B représentent deux exemples de circuit intégrateur à fenêtrage temporel connus de l'état de la technique ;

la Fig. 3 illustre schématiquement un circuit intégrateur à multifenêtrage temporel selon un premier mode de réalisation de l'invention ;

la Fig. 3A représente la structure d'une batterie de capacités d'intégration utilisée dans le circuit de la Fig. 3 ;

la Fig. 3B donne un exemple de chronogramme de fonctionnement du circuit intégrateur de la Fig. 3 ;

les Figs. 4 à 6 représentent respectivement une première, une seconde et une troisième variantes de réalisation du circuit intégrateur de la Fig. 3 ;

la Fig. 7 illustre schématiquement un circuit intégrateur à multifenêtrage temporel selon un second mode de réalisation de l'invention ;

la Fig. 7A représente la structure d'un module utilisé dans le circuit de la Fig. 7 ;

la Fig. 7B représente un chronogramme de fonctionnement du circuit intégrateur de la Fig. 7 ;

la Fig. 8 représente une première variante de réalisation du circuit intégrateur de la Fig. 7 ;

la Fig. 8A représente la structure d'un module utilisé dans le circuit de la Fig. 8 ;

les Figs. 9 et 10 représentent respectivement une une seconde et une troisième variantes de réalisation du circuit intégrateur de la Fig. 7 ;

la Fig. 11 illustre schématiquement un circuit intégrateur à multifenêtrage temporel selon un troisième mode de réalisation de l'invention ;

la Fig. 11A représente la structure d'un module utilisé dans le circuit de la Fig. 11 ;

la Fig. 12 illustre schématiquement une première variante de réalisation du circuit intégrateur de la Fig. 11 ;

la Fig. 12A représente la structure d'un module utilisé dans le circuit de la Fig. 12 ;

la Fig. 13 illustre schématiquement un circuit intégrateur selon la Fig. 8 comportant en outre des moyens pour compenser un effet de décalage ;

la Fig. 13A représente la structure d'un module utilisé dans le circuit de la Fig. 13 ;

la Fig. 13B représente un chronogramme de fonctionnement du circuit intégrateur de la Fig. 13 ; et

la Fig. 14 illustre schématiquement la structure d'un amplificateur opérationnel à sortie unipolaire comportant des moyens pour compenser un effet de décalage selon l'invention.

## EXPOSÉ DÉTAILLÉ DE MODES DE RÉALISATION PARTICULIERS

L'idée à la base de l'invention est de multiplexer toutes ou seulement certaines des opérations d'intégration à multifenêtrage temporel au sein d'au moins une partie du circuit intégrateur.

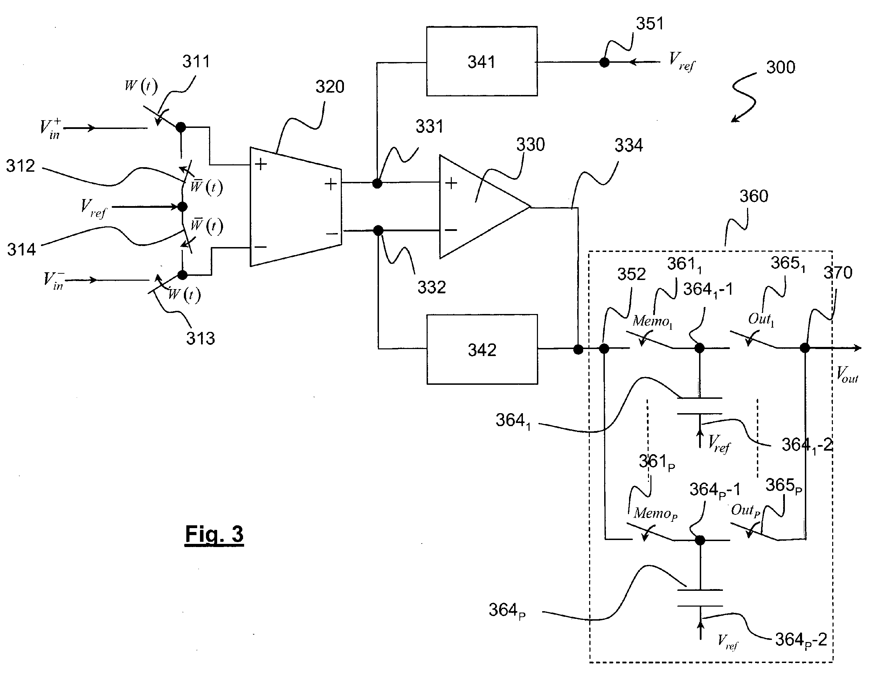

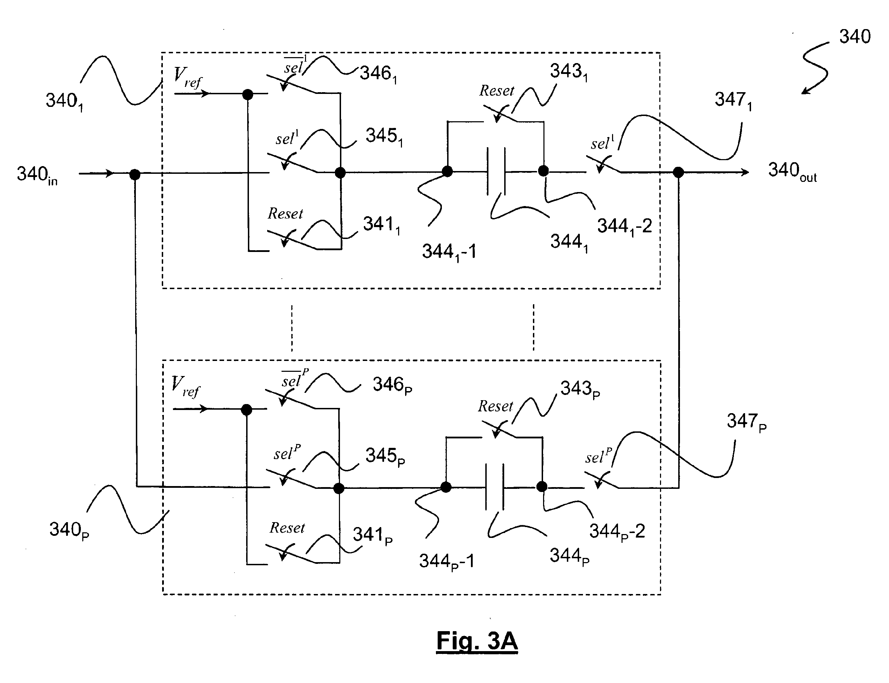

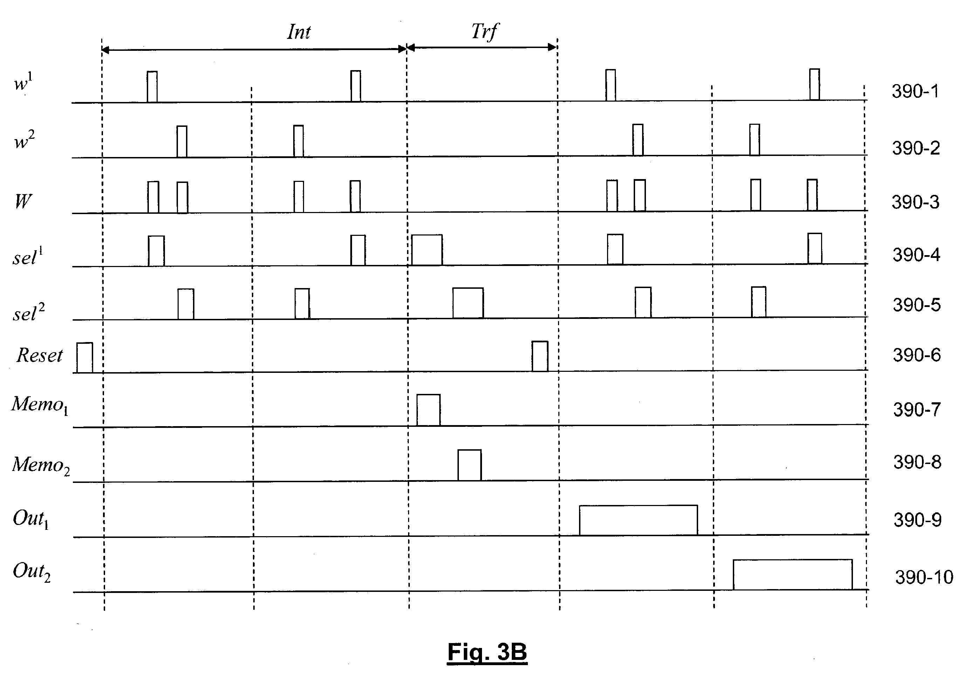

Un premier mode de réalisation de l'invention est illustré en Fig.3. Le circuit intégrateur 300, à l'instar du circuit intégrateur 200, comprend une pluralité de commutateurs 311 à 314, un module de conversion tension/courant 320 et un amplificateur opérationnel 330. Les commutateurs 311 et 313 sont commandés par un même signal logique $W$. Comme on le verra plus loin, le signal $W$ est un signal de fenêtrage composite. Lorsque le signal $W$ est actif, les commutateurs 311 et 313 appliquent respectivement les tensions $V_{in}^{+}$ et $V_{in}^{-}$, formant la tension différentielle d'entrée, au module de conversion 320. Les commutateurs 312 et 314 sont commandés par le signal logique complémentaire $\overline{W}$. Lorsque le signal $\overline{W}$ est actif, la tension de référence $V_{ref}$ est appliquée par les commutateurs 312 et 314 aux entrées du module de conversion 320, ce qui correspond à une tension d'entrée différentielle nulle.

La sortie différentielle en courant du module de conversion 320 est reliée à l'entrée différentielle de l'ampli-op 330.

A la différence du circuit 200, le circuit intégrateur 300 comprend une première batterie 341 de $P$ capacités d'intégration, située entre la borne 351 et une première entrée (masse virtuelle) 331 de l'ampli-op 330. La tension de référence $V_{ref}$ est appliquée en permanence sur la borne de sortie 351. De manière similaire, le circuit comprend une seconde batterie 342 de $P$ capacités d'intégration, montée en contre-réaction négative entre la sortie 334 de l'ampli-op et sa seconde entrée 332. Les batteries 341 et 342 de capacités d'intégration ont la même structure 340, décrite ci-après.

La structure commune des batteries de capacités d'intégration a été représentée en Fig. 3A. La batterie 340 comprend une pluralité $P$ de modules identiques notés $340_{1},..,340_{P}$, reliés à une borne d'entrée commune $340_{In}$ et une borne de sortie commune $340_{Out}$.

Chaque module $340_{p}$ comprend une capacité $344_{p}$, ayant une valeur de capacité $C$, une paire de commutateurs de sélection $345_{p}$ et $347_{p}$ commandés par le signal logique $sel^{p}$ et un commutateur de repos $346_{p}$ commandé par le

signal complémentaire $\overline{sel^p}$. Lorsque le signal $sel^p$ est actif, la borne $344_p$-1 est connectée via le commutateur $345_p$ à la borne d'entrée $340_{In}$. De même, la borne $344_p$-2 est connectée via le commutateur $347_p$ à la borne de sortie $340_{Out}$. La capacité $344_p$ est ainsi sélectionnée dans la boucle de contre-réaction de l'ampli-op et le courant généré par le module de conversion 320 charge la capacité en question. Comme on le verra plus loin, les différents signaux $sel^p$ permettent de sélectionner différents fenêtrages au sein du signal composite $W$.

A l'inverse, lorsque le signal $\overline{sel^p}$ est actif, la borne $344_p$-1 reste soumise à la tension de référence $V_{ref}$ via le commutateur $346_p$ et la borne $344_p$-2 est déconnectée de la sortie $340_{Out}$ par le commutateur $347_p$. Aucun courant ne circule à travers la capacité $344_p$ et l'application de la tension $V_{ref}$ prévient toute décharge de la capacité $344_p$ lors de la commutation.

Chaque module $340_p$ comprend également un commutateur $341_p$, monté en parallèle avec les commutateurs $345_p$ et $346_p$ entre les bornes $340_{In}$ et $341_p$-1, ainsi qu'un commutateur $343_p$ monté en parallèle avec la capacité $344_p$. Les commutateurs $341_p$ et $343_p$ sont tous deux commandés par le signal logique de remise à zéro $Reset$. Lorsque le signal $Reset$ est actif, la capacité est déchargée par un court-circuit entre ses bornes et ses bornes sont portées au potentiel de référence $V_{ref}$.

Revenant en Fig. 3, la borne de sortie 352 de la seconde batterie 342 de capacités d'intégration est reliée à une batterie 360 de capacités de mémorisation. Celle-ci comprend une pluralité $P$ de capacités de mémorisation $364_p$, $p=1,..,P$. Une même pluralité $P$ de commutateurs $361_p$, commute respectivement la borne d'entrée 352 sur les bornes $364_p$-1 des capacités $364_p$, $p=1,..,P$. Plus précisément, lorsque le signal de commande $Memo_p$ est actif, le commutateur $361_p$ relie l'entrée 352 à la borne $364_p$-1 de la capacité de mémorisation $364_p$. Les bornes $364_p$-1 sont par ailleurs connectées à la sortie 370 via des commutateurs de sortie $365_p$, respectivement commandés par des signaux logiques $Out_p$, $p=1,..,P$. Les autres bornes $364_p$-2 des capacités $364_p$ sont quant à elles maintenues à la tension de référence $V_{ref}$.

La Fig. 3B illustre le chronogramme de fonctionnement du circuit intégrateur de la Fig. 3.

On a supposé à titre d'illustration que $P=2$. Par exemple, le circuit intégrateur sera capable d'analyser deux utilisateurs dans un système, ou deux positions de modulation d'un utilisateur dans un système TH-UWB ou encore deux intervalles de distance distincts dans un système radar.

On a respectivement représenté en 390-1 et 390-2 un premier ($w^1$) et un second ($w^2$) signaux de multifenêtrage. Chaque signal de multifenêtrage comporte de manière générale une pluralité $N$ de fenêtres temporelles, c'est-à-dire :

$$w^p(t) = \sum_{n=1}^{N} w_n^p(t)$$

Les fenêtres temporelles $w_n^p(t)$, $p=1,..., P$, $n=1,..,N$ ne présentent pas de chevauchement.

Dans le cas illustré, on a $N=2$.

Le signal de fenêtrage composite $W$ a été représenté en 390-3. Il est obtenu en effectuant un OU logique des signaux de multifenêtrage $w^p$, soit :

$$W = \bigvee_{p=1,..,P} w^p \qquad (5)$$

Les signaux de sélection $sel^p$, $p=1,2$ sont donnés en 390-4 et 390-5 respectivement. Le signal $sel^p$ présente des fronts montants synchrones avec ceux du signal de multifenêtrage $w^p$. Alternativement, les fronts montants de $sel^p$ peuvent légèrement précéder ceux de $w^p$. En tout état de cause, les fronts descendants de $sel^p$ sont retardés d'un temps $\tau$ par rapport aux fronts descendants de $w^p$. Le temps $\tau$ est déterminé pour tenir compte du temps de traversée du module de conversion 320 et du temps de rétablissement en fin d'intégration dans une fenêtre temporelle. Ainsi, sur le $n^{ième}$ front descendant de $sel^p$, on est certain que le signal d'entrée a bien été pris en compte et intégré dans toute la durée de la fenêtre temporelle $w_n^p$ par la capacité d'intégration $344_p$. On notera que le signal $sel^p$ permet de sélectionner le signal de multifenêtrage $w^p$, c'est-à-dire les fenêtres temporelles $w_n^p$, au sein du signal composite $W$, soit $w^p=W \wedge sel^p$.

Le signal de remise à zéro $Reset$ est donné en 390-6. Une remise à zéro intervient avant le démarrage d'un cycle d'intégration, c'est-à-dire avant le début des $P$ opérations d'intégration en parallèle. Il polarise les différents éléments du circuit à la tension de référence, ce qui garantit une initialisation stable et reproductible du circuit à chaque cycle d'intégration *Int.*

Le cycle d'intégration *Int* est suivi d'un cycle de transfert *Trf* dans lequel les *P* résultats d'intégration sont séquentiellement transférés aux capacités de mémorisation $364_p$ grâce aux commandes *Memo$_p$, p*=1,2 représentées en 390-7 et 390-8. Lorsque les signaux *sel$^p$* et *Memo$_p$* sont simultanément actifs, la charge contenue dans la capacité d'intégration $344_p$ est transférée à la capacité de mémorisation associée $364_p$ via les commutateurs $347_p$ et $361_p$. Une fois que tous les résultats d'intégration ont été transférés dans les capacités de mémorisation, une remise à zéro *Reset* peut intervenir. Cette remise à zéro n'affecte pas les charges stockées dans la batterie de capacités de mémorisation 360.

Les résultats ainsi mémorisés peuvent être lus au cours du cycle d'intégration suivant au moyen des signaux de lecture *Out$_p$, p*=1,2, représentés en 390-9 et 390-10. Lorsque le signal *Out$_p$* est actif, la tension présente à la borne $364_p$-1 peut être lue sur la borne de sortie 370 du circuit. Ainsi, la lecture des résultats d'intégration du cycle précédent peut intervenir en parallèle avec les opérations d'intégration du cycle courant.

Le fait que les opérations d'intégration utilisent le même module de conversion et le même amplificateur opérationnel permet de réduire la dispersion et donc d'améliorer sensiblement la précision et la fiabilité des résultats d'intégration.

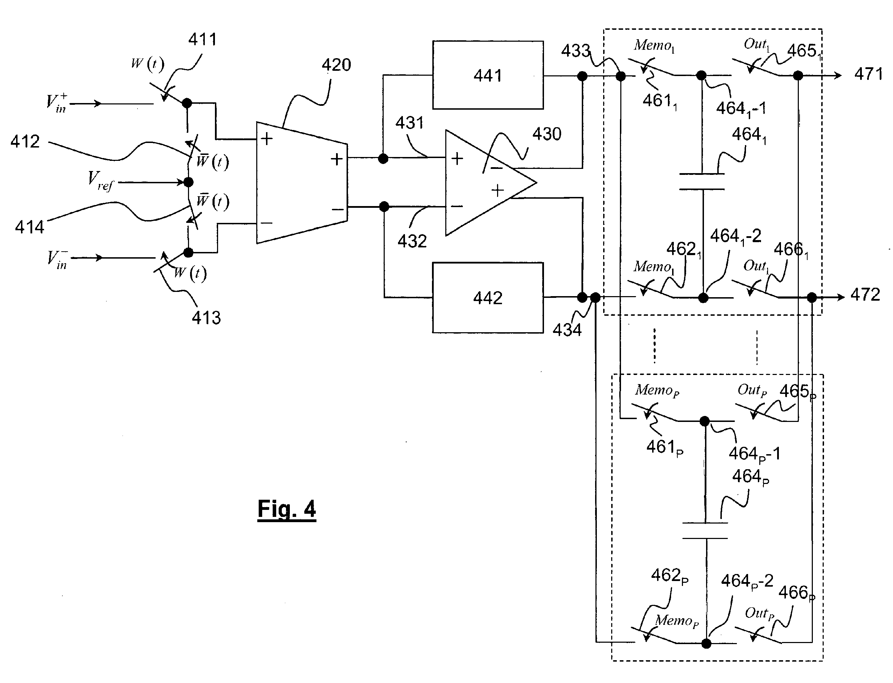

La Fig. 4 représente une première variante de réalisation de l'intégrateur de la Fig. 3. Les éléments identiques à ceux de la Fig. 3 sont désignés par les mêmes numéros de référence translatés de 100. La présente variante se distingue du circuit précédent en ce que la sortie n'est pas unipolaire mais différentielle. Les deux batteries de capacités d'intégration 441 et 442 sont montées en contre-réaction négative respective entre les sorties et les entrées différentielles de l'amplificateur opérationnel. Elles ont la même structure que celle représentée en Fig. 3A.

Les sorties des deux batteries 441 et 442 sont reliées aux bornes 433 et 434 entre lesquelles une pluralité *P* de capacités de mémorisation $464_p$ sont montées en parallèle. Les bornes $464_p$-1, *p*=1,..,*P*, sont reliées à la borne 433 à travers les commutateurs $461_p$ et à la borne de sortie 471 à travers les commutateurs $465_p$, respectivement. De manière similaire, les bornes $464_p$-2, *p*=1,..,*P*, sont reliées à la borne 434 à travers les commutateurs $462_p$ et à la borne de sortie 472 à travers les commutateurs $466_p$, respectivement. Les commutateurs $461_p$ et $462_p$, *p*=1,..,*P*, sont respectivement commandés par les commandes *Memo$_p$, p*=1,..,*P* : ils permettent de transférer les charges stockées dans les capacités d'intégration, sélectionnées par les commandes *sel$^p$* au sein de 441 et 442 vers les capacités de mémorisation. Les commutateurs $465_p$ et $466_p$, *p*=1,..,*P*, sont respectivement commandés par les commandes *Out$_p$, p*=1,..,*P*. Lorsque le signal *Out$_p$* est actif, la tension présente entre les bornes de la capacité $464_p$ peut être lue entre les bornes de sortie 471 et 472 du circuit.

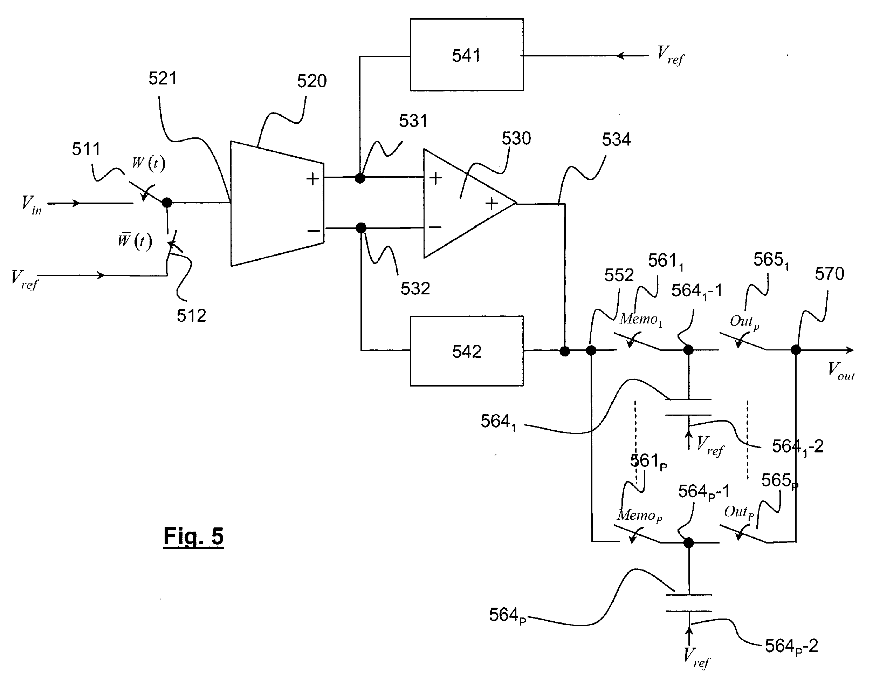

La Fig. 5 illustre une seconde variante de réalisation du circuit de la Fig. 3. Elle s'en distingue en ce que l'entrée du module de conversion tension/courant est unipolaire, autrement dit le courant généré par ce module est proportionnel à la tension appliquée à son entrée 521. Cette entrée est commutée soit à la tension *V$_{in}$* du signal à intégrer par le commutateur 511, soit à la tension de référence *V$_{ref}$* par le commutateur 512. Le commutateur 511 est commandé par le signal de fenêtrage composite *W* et le commutateur 512 par son complémentaire $\overline{W}$.

Le reste du circuit est identique à celui de la Fig. 3, les mêmes éléments portant des numéros de référence translatés de 200.

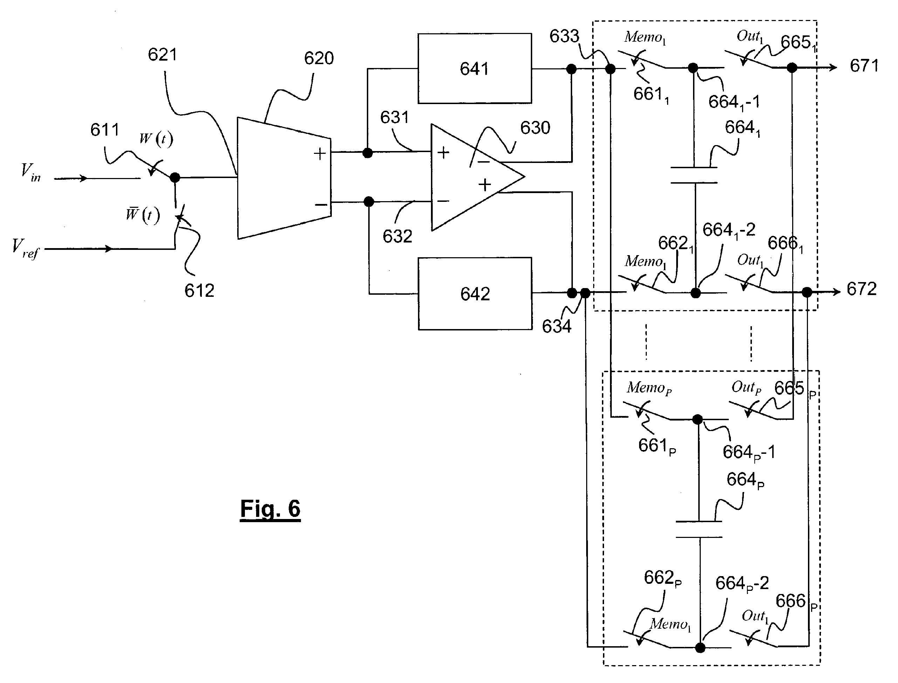

La Fig. 6 représente une troisième variante de réalisation de l'intégrateur de la Fig. 3. Cette variante de réalisation présente une sortie différentielle comme la première variante mais une entrée unipolaire comme la seconde variante. Elle ne sera donc pas davantage décrite. Les éléments identiques à ceux de la Fig. 4 et ceux de la Fig. 5 sont respectivement translatés de 200 et 100.

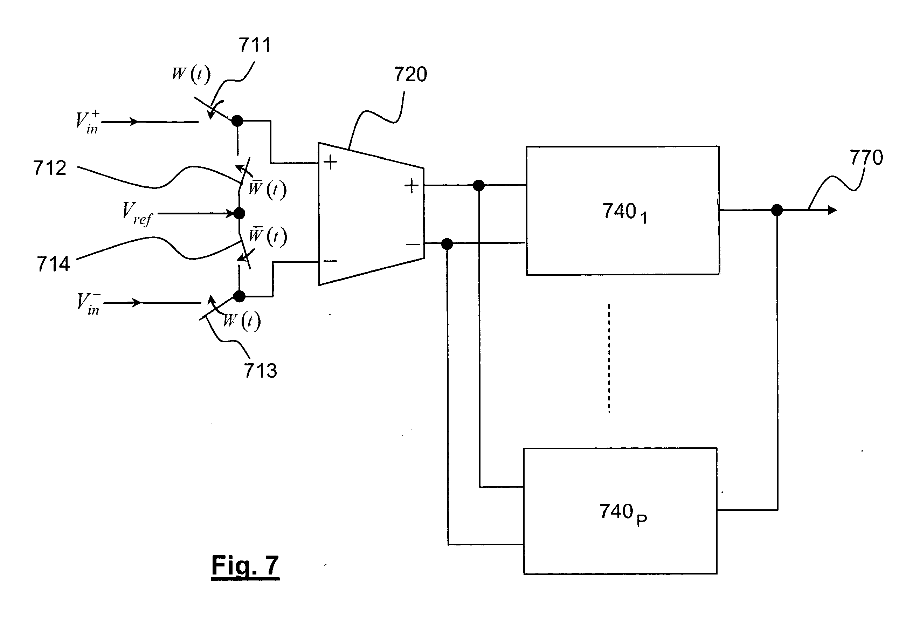

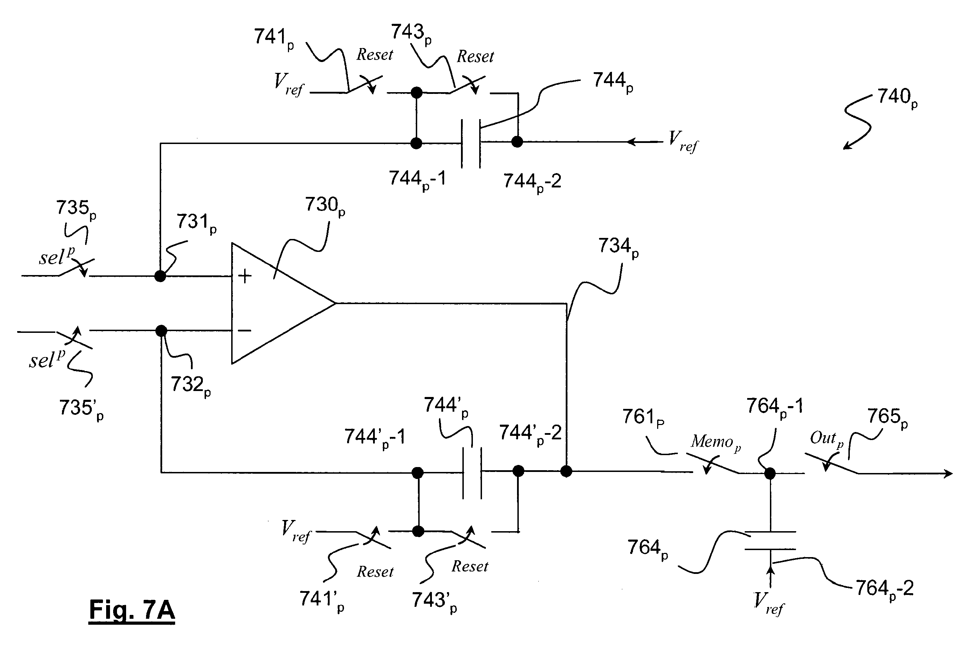

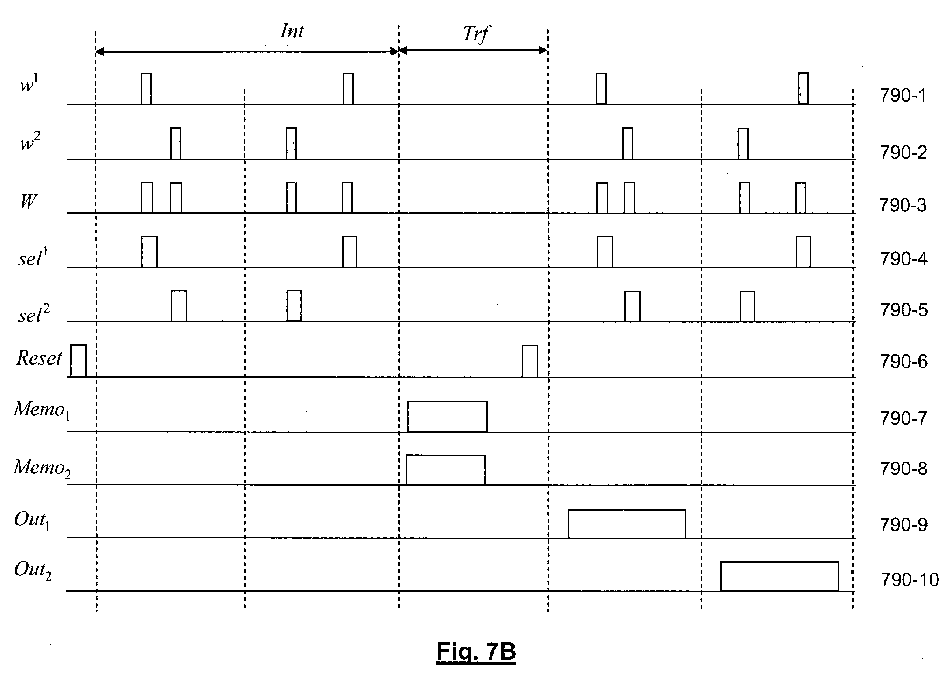

La Fig. 7 représente un second mode de réalisation du circuit intégrateur selon l'invention.

Selon ce mode de réalisation, les commutateurs d'entrée et le module de conversion tension/courant sont communs aux différentes opérations d'intégration avec multifenêtrage comme dans le premier mode. Plus précisément, les éléments 711-714, 720 sont respectivement identiques aux éléments 311-314, 320.

En revanche, les P opérations d'intégration, de mémorisation et de lecture sont réalisées au sein de modules distincts $740_1$,..., $740_P$, montés en parallèle sur les sorties du module de conversion 720. Les différents modules $740_p$ sont reliés en sortie à la borne de sortie du circuit 770. Les différents modules $740_p$, *p*=1,..,*P* ont tous la même structure illustrée en Fig. 7A.

La Fig. 7A représente la structure d'un module $740_p$. Ce module est organisé autour d'un amplificateur opérationnel $730_p$ dont les entrées $731_p$ et $732_p$ sont respectivement reliées aux bornes de sortie du module de conversion 720 à travers deux commutateurs $735_p$ et $735'_p$ commandés par la même commande *sel$^p$*.

Une première capacité, $744_p$, dite capacité de référence, de valeur *C,* est disposée entre la tension de référence *V$_{ref}$* et une première entrée $731_p$ de l'ampli-op. Une seconde capacité d'intégration $744'_p$ de même valeur est montée en contre-réaction négative entre la sortie de l'ampli-op et sa seconde entrée $732_p$. (les valeurs des capacités $744_p$ et $744'_p$, *p*=1,..,*P* sont toutes égales à *C*). Un commutateur $743_p$ (resp. $743'_p$) commandé par le signal de remise à zéro *Reset* est monté en parallèle entre les bornes de la capacité $744_p$ (resp. $744'_p$). En outre, un commutateur $741_p$ (resp. $741'_p$) également commandé par le signal *Reset,* relie la borne $744_p$-1 (resp. $741'_p$-1) de la capacité $744_p$ (resp. $744'_p$)

à la tension $V_{ref}$. Ainsi, lorsque le signal *Reset* est actif, les capacités $744_p$ et $744'_p$ sont court-circuitées et leurs bornes polarisées à la tension $V_{ref}$.

La borne $764_p$-1 de la capacité de mémorisation $764_p$ est reliée, d'une part, à la borne $744'_p$-2 de la capacité d'intégration, via le commutateur de transfert $761_p$ et, d'autre part, à la sortie du circuit intégrateur 770, via le commutateur de lecture $765_p$. Le commutateur de transfert $761_p$, commandé par le signal *Memo$_p$* permet de transférer la charge intégrée dans $744'_p$ à la capacité de mémorisation correspondante $764_p$. Le commutateur de lecture $765_p$, commandé par le signal de lecteur *Out$_p$* permet de faire apparaître sur la sortie 770, la tension correspondant à la charge mémorisée.

La Fig. 7B montre un chronogramme de fonctionnement de l'intégrateur selon le second mode de réalisation, pour un exemple avec $p=2$ et $N=2$.

Les signaux de multifenêtrage $w^1$, $w^2$ et le signal composite $W$ représentés en 790-1, 790-2 et 790-3 sont identiques à ceux de la Fig. 3B. En revanche, on notera que les signaux de sélection *sel$^p$*, $p=1,2$, en 790-4 et 790-5 sont légèrement différents des précédents. En effet, du fait de la séparation physique des différents modules $740_p$ dans le second mode de réalisation, il n'est pas nécessaire de multiplexer le transfert des charges des capacités d'intégration vers les capacités de mémorisation. Ainsi, les signaux *sel$^p$* n'ont pas besoin d'être actifs pendant le cycle transfert *Trf*. De la même façon, les signaux de mémorisation *Memo$_p$* sont avantageusement tous identiques, le transfert des charges étant alors effectué de manière simultanée et parallèle pendant le cycle de transfert. La lecture des valeurs mémorisées peut se faire, comme en Fig. 3A, pendant le cycle d'intégration suivant, en activant séquentiellement les commandes *Out$_p$,* tel qu'indiqué en 790-9 et 790-10.

Le second mode de réalisation présente par rapport au premier mode l'avantage de permettre une commutation très rapide d'une fenêtre temporelle à l'autre. Si les signaux de multifenêtrage $w^1$ et $w^2$ sont très rapprochés, par exemple si les fenêtres $w_1^1$ et $w_1^2$ se succèdent à faible intervalle, l'indépendance des modules $740_1$ et $740_2$ assure l'indépendance des opérations d'intégration. En particulier, les commutations de sélection relatives à la première fenêtre ne créent pas de perturbation de courant dans la boucle de contre-réaction relative à la seconde fenêtre.

Le second mode de réalisation permet également d'obtenir un haut niveau de précision grâce au partage du module de conversion tension/courant par les $P$ opérations d'intégration en parallèle.

Il permet encore d'accélérer la phase de transfert de charge entre les capacités d'intégration et les capacités de mémorisation puisque ce transfert peut être réalisé en parallèle.

En dépit d'une pluralité d'amplificateurs opérationnels, le circuit intégrateur selon le second mode de réalisation présente une consommation relativement modeste du fait de l'utilisation d'un module commun de conversion tension/ courant.

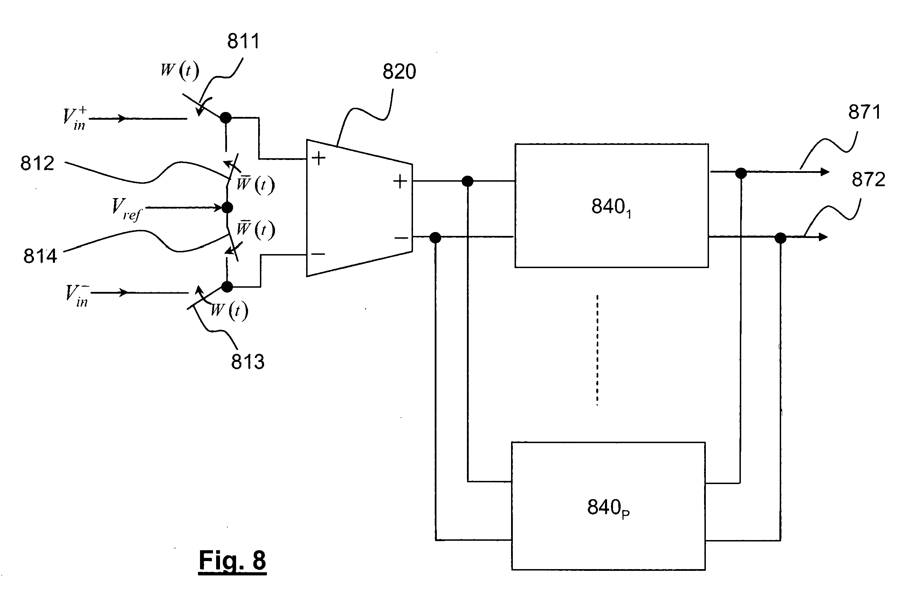

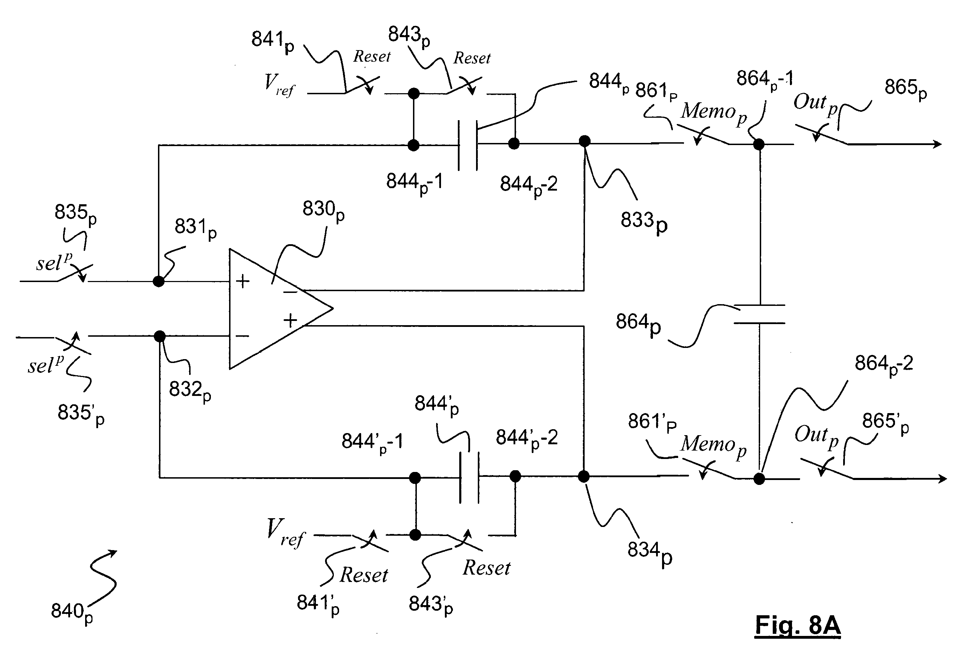

La Fig. 8 représente une première variante du circuit intégrateur de la Fig. 7, dans laquelle l'entrée et la sortie du circuit sont toutes deux différentielles. Une pluralité de modules $840_p$, $p=1,..,P$ sont montés en parallèle entre les bornes de sortie différentielle du module de conversion 820 et les bornes de sortie différentielle 871 et 872 du circuit.

La Fig. 8A illustre la structure d'un module $840_p$ de la Fig. 8. A la différence de la structure de la Fig. 7A, la sortie de ce module est différentielle au lieu d'être unipolaire. On notera que les deux voies d'intégration de part et d'autre de l'ampli-op $830_p$ sont ici symétriques.

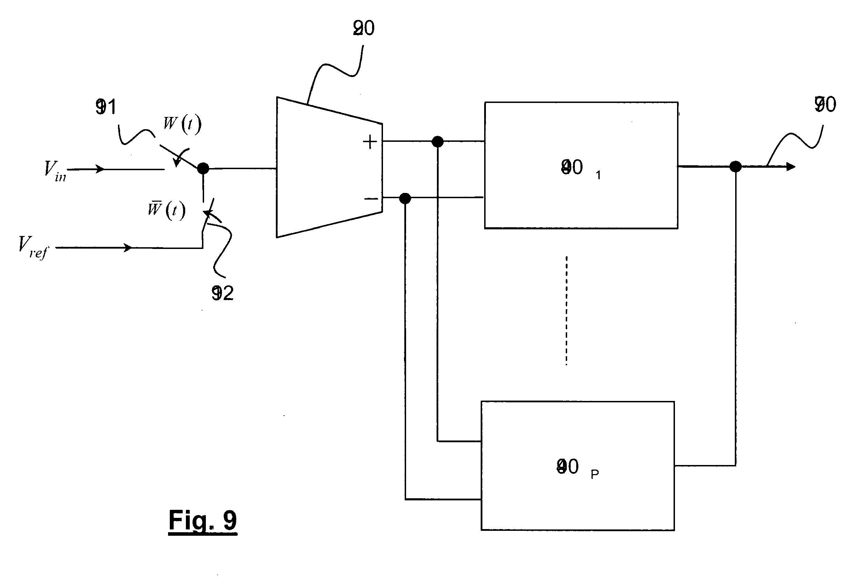

La Fig. 9 représente une seconde variante du circuit intégrateur de la Fig. 7. Elle s'en distingue toutefois en ce qu'elle présente une entrée unipolaire au lieu d'une entrée différentielle. Autrement dit, l'entrée et la sortie du circuit sont ici toutes deux unipolaires.

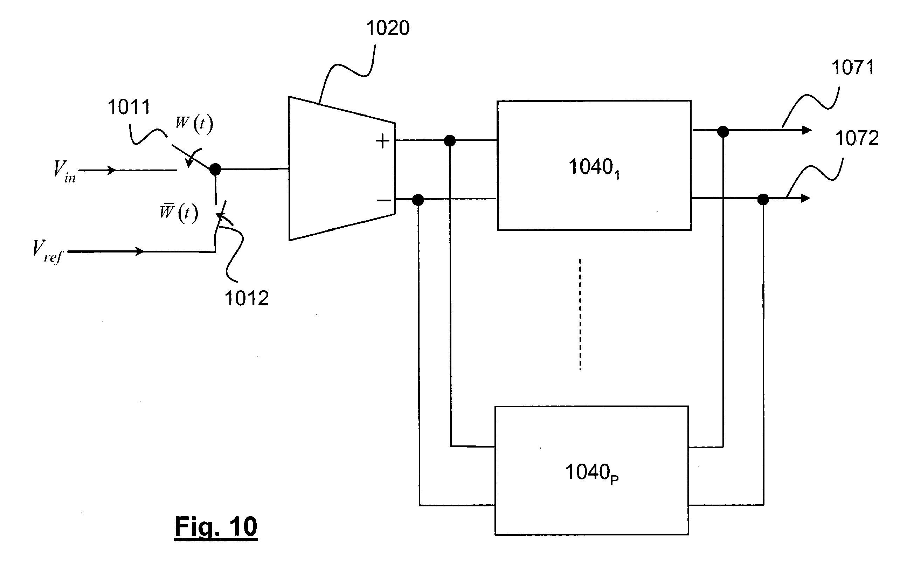

La Fig. 10 représente une troisième variante du circuit intégrateur de la Fig. 7. Elle se distingue de la première variante en ce que l'entrée est unipolaire, et de la seconde variante, en ce que la sortie est différentielle.

Dans les Figs. 9 et 10, les éléments identiques à ceux de la Fig. 7, 8 sont respectivement translatés de 200. Leur description ne sera donc pas répétée.

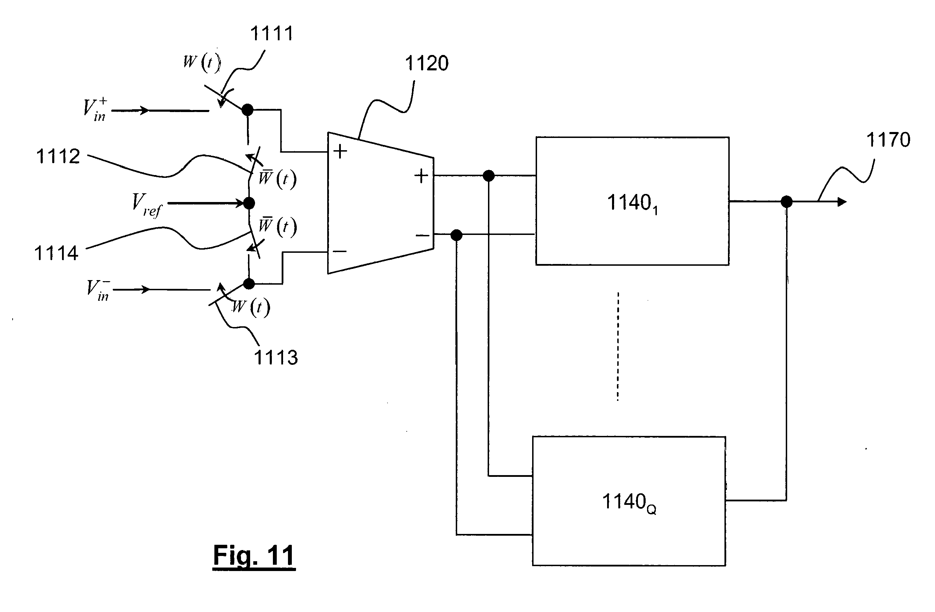

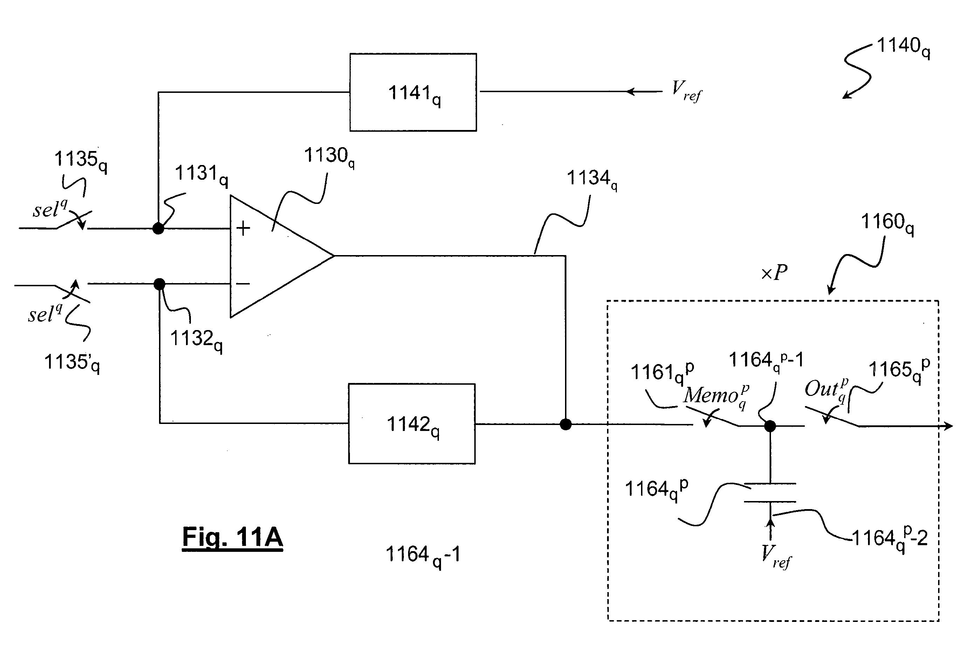

La Fig. 11 représente un troisième mode de réalisation du circuit intégrateur selon l'invention. Ce mode de réalisation est une forme hybride des premier et second modes de réalisation.

Les commutateurs 1111 à 1114 ainsi que le module de conversion tension/courant 1120 sont identiques à ceux des modes de réalisation précédents.

Une pluralité de modules $1140_q$, $q=1,..,Q$, sont montés en parallèle sur les sorties du module de conversion tension/courant 1120.

La structure d'un module $1140_q$ est illustrée en Fig. 11A. Il comprend un amplificateur opérationnel $1130_q$ ainsi qu'une première et une seconde batteries, désignées respectivement par $1141_q$ et $1142_q$, comportant chacune $P$ capacités d'intégration. La structure des batteries $1141_q$ et $1142_q$ est identique à celle donnée en Fig. 3A. La batterie de capacités d'intégration $1141_q$ est disposée entre la tension de référence $V_{ref}$ et la masse virtuelle $1131_q$ de l'ampli-op. En revanche, la batterie de capacités d'intégration $1142_q$ est disposée dans une boucle de contre-réaction entre la sortie de l'ampli-op et sa masse virtuelle $1132_q$. La sortie de la batterie $1142_q$ est connectée à une batterie $1160_q$ de P capacités de mémorisation $1164_q^p$, via les commutateurs respectifs $1161_q^p$, $p=1,..,P$. La charge de la capacité $1161_q^p$ peut être lue sur la sortie 1170 en activant le commutateur associé $1165_q^p$.

On comprendra que le circuit de la Fig. 11 fournit $QP$ voies d'intégration à multifenêtrage temporel. Ces voies sont groupées en sous-ensembles de $P$ voies d'intégration, les voies d'un même sous-ensemble partageant le même module de conversion tension/courant, le même ampli-op et la même boucle de contre-réaction. Les opérations d'intégration de ces différentes voies sont multiplexées dans le temps. En revanche, les voies de sous-ensembles distincts ne partagent que le module de conversion tension/courant. Les opérations d'intégration de ces voies peuvent être effectuées en parallèle.

De manière générale, une voie d'intégration est ici sélectionnée en activant les commutateurs de sélection de sous-ensemble, dits de premier rang, $1135_q$ et $1135'_q$, ainsi que des commutateurs de sélection de voie au sein de ce sous-ensemble, dits de second rang. Ces commutateurs de second rang correspondent aux commutateurs $345_1/346_1$ (cf. Fig. 3A) dans les batteries $1141_q$ et $1142_q$.

L'homme du métier comprendra que, comme le premier et le second modes de réalisation, le troisième mode peut se décliner selon une première variante avec entrée différentielle et sortie différentielle, une seconde variante avec entrée unipolaire et sortie unipolaire, et enfin une troisième variante avec entrée unipolaire et sortie différentielle.

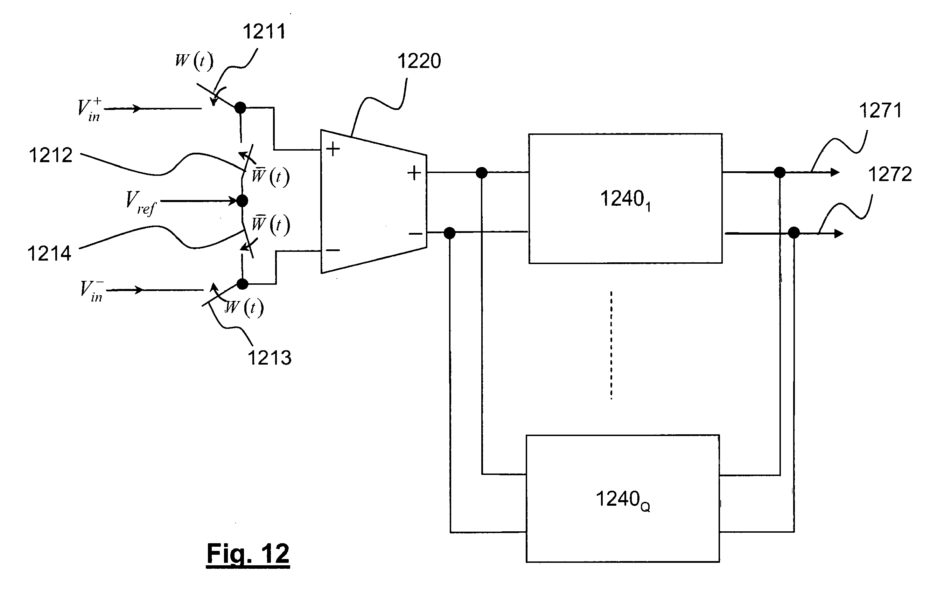

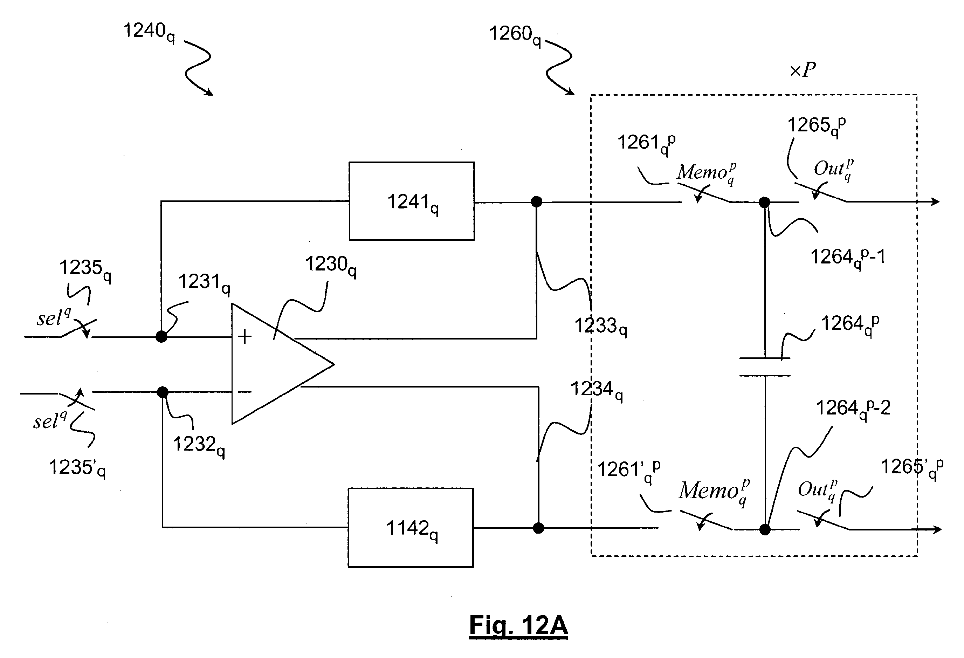

La Fig. 12 illustre à titre d'exemple la première variante du troisième mode de réalisation. Comme en Fig. 11, le circuit intégrateur représenté fournit un ensemble de $QP$ voies d'intégration à multifenêtrage temporel, ces voies étant groupées en sous-ensembles de $P$ voies d'intégration. A la différence de la Fig. 11, les modules $1240_q$, $q=1,..,Q$, ont chacun une sortie différentielle connectée sur les bornes de sortie 1271 et 1272 du circuit intégrateur.

La structure d'un module $1240_q$ est illustrée en Fig. 12A. Il comprend un amplificateur opérationnel $1230_q$ ainsi qu'une première et une seconde batteries de capacités d'intégration, désignées respectivement par $1241_q$ et $1242_q$, comportant chacune $P$ capacités. La structure des batteries $1241_q$ et $1242_q$ est identique à celle donnée en Fig. 3A. La première batterie de capacités d'intégration $1241_q$ est montée en contre-réaction entre la première sortie $1233_q$ de l'ampli-op et sa première entrée $1231_q$. La seconde batterie de capacités d'intégration $1242_q$ est montée en contre-réaction entre la seconde sortie $1234_q$ de l'ampli-op et sa seconde entrée $1233_q$. Les sorties respectives des batteries de capacités d'intégration, $1241_q$ et $1242_q$, sont connectées à une batterie de capacités de mémorisation $1260_q$. Plus précisément, cette batterie $1260_q$ comprend une pluralité $P$ de capacités de mémorisation $1264_q{}^p$, $p=1,..,P$, connectées en parallèle aux sorties $1233_q$ et $1234_q$ de l'ampli-op, via les commutateurs respectifs $1261_q{}^p$. La tension aux bornes de la capacité $1264_q{}^p$ peut être lue entre les sorties 1271 et 1272 en activant les commutateurs de lecture $1165_q{}^p$ et $1165'_q{}^p$.

La sélection d'une voie d'intégration donnée se fait comme précédemment en activant les commutateurs de sélection d'un sous-ensemble, c'est-à-dire de premier rang et, au sein de ce sous-ensemble, en activant les commutateurs de sélection de voie, c'est-à-dire de second rang.

De manière générale, un circuit intégrateur à multifenêtrage temporel peut comporter un effet de décalage ou *offset* dû principalement au désappariement *(mismatching)* des transistors MOS composant les entrées du convertisseur tension/courant et de l'amplificateur opérationnel. Ce décalage peut être compensé par post-traitement *(post-processing)* en réajustant la valeur obtenue après intégration, d'un facteur connu et constant.

Cependant, lorsque le nombre d'intégrations cohérentes augmente, le cumul du décalage peut finir par produire une saturation en sortie du ou des amplificateur(s) opérationnel(s). Ceci modifie la précision sur la valeur intégrée car l'intégration n'est plus effectuée dans la zone linéaire de fonctionnement. Dans ce cas, une compensation par post-traitement n'est plus possible.

Ainsi, pour pouvoir conserver une bonne précision sur le résultat de l'intégration, il est nécessaire de limiter le nombre d'intégrations cohérentes à un nombre déterminé d'environ dix intégrations.

Afin de résoudre ce problème, et d'améliorer la détectabilité du récepteur en augmentant le nombre d'intégrations cohérentes, le circuit intégrateur peut être avantageusement configuré pour supprimer l'effet de cumul du décalage en le compensant en continu lors du processus d'intégration.

Plus particulièrement, le circuit intégrateur selon la présente invention peut être configuré pour inverser périodiquement l'effet du décalage sur le résultat de l'intégration. Ceci peut être réalisé en ajoutant des paires de commutateurs à commutation alternée le long de la voie d'intégration. Ainsi, pour un nombre pair d'intégrations cohérentes, le décalage est compensé par le fait qu'il est appliqué dans un sens puis dans l'autre sur le résultat de l'intégration.

Avantageusement, dans le cas où la sortie de l'amplificateur opérationnel est différentielle, deux paires de commutateurs à commutation alternée peuvent être montées à l'entrée ainsi qu'à la sortie de l'amplificateur opérationnel.

De même, dans le cas où l'entrée du convertisseur tension/courant est différentielle, deux paires de commutateurs à commutation alternée peuvent être montées à l'entrée ainsi qu'à la sortie du convertisseur tension/courant.

Ainsi, le circuit intégrateur comportant un convertisseur tension/courant à entrée différentielle (c'est-à-dire, selon les modes de réalisation des Figs. 3, 4, 7, 8, 11 et 12) peut comprendre des première et deuxième paires de commutateurs à commutation alternée selon des première et seconde phases montées en amont du convertisseur tension/courant et des troisième et quatrième paires de commutateurs à commutation alternée selon les première et seconde phases montées en aval du convertisseur tension/courant. Chaque paire de commutateurs peut être commandée par des premier et second signaux d'horloge selon les première et seconde phases.

De même, le circuit intégrateur comportant un amplificateur opérationnel à sortie différentielle (c'est-à-dire, selon les modes de réalisation des Figs. 4, 6, 8A, et 12A) peut comprendre des cinquième et sixième paires de commutateurs à commutation alternée selon les première et seconde phases montées en amont de l'amplificateur opérationnel et des septième et huitième paires de commutateurs à commutation alternée selon les première et seconde phases montées en aval de l'amplificateur opérationnel.

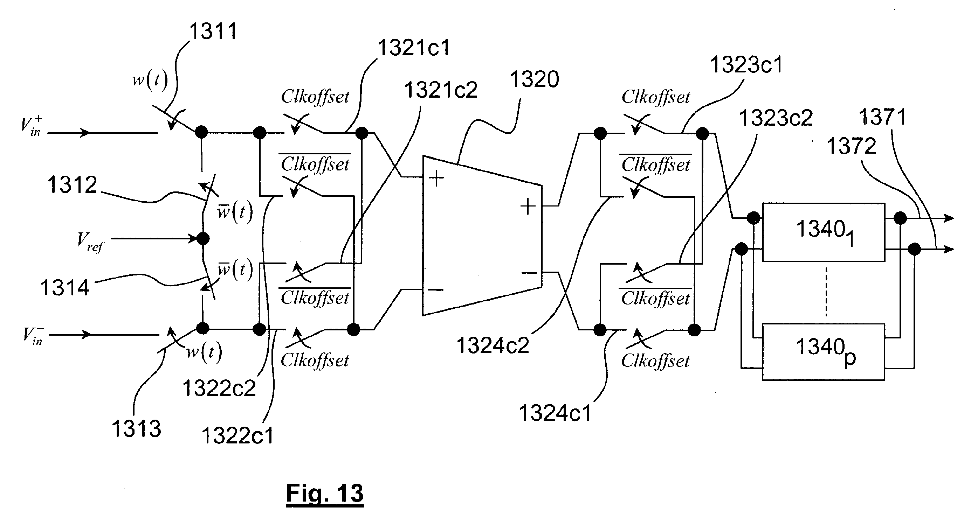

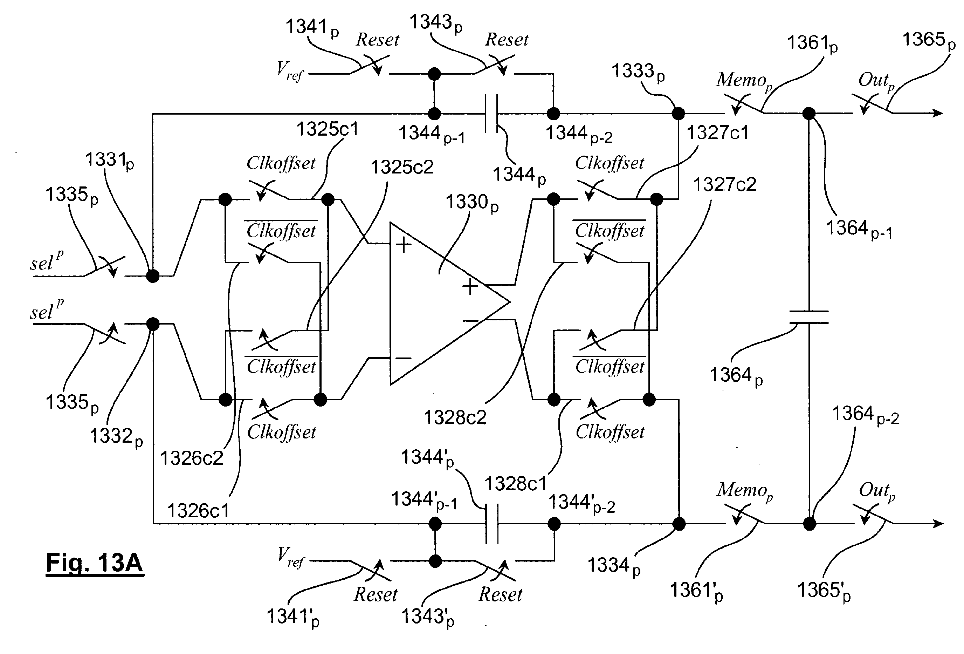

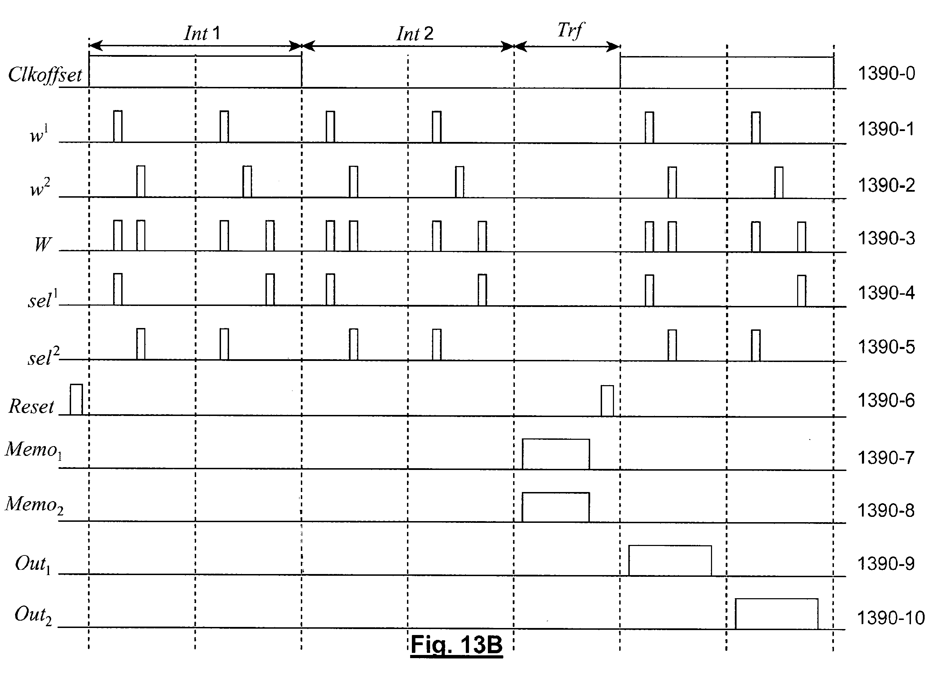

Les Figs. 13 et 13A illustrent à titre d'exemple le montage des paires de commutateurs dans le circuit intégrateur représenté sur les Figs. 8 et 8A.

La structure du circuit intégrateur de la Fig. 13 se distingue de la Fig. 8 en ce qu'elle comporte des première (1321c1 et 1321c2) et deuxième (1322c1 et 1322c2) paires de commutateurs à commutation alternée en amont du module de conversion 1320 et des troisième (1323c1 et 1323c2) et quatrième (1324c1 et 1324c2) paires de commutateurs à commutation alternée en aval du module de conversion 1320.

Plus particulièrement, les première (1321c1 et 1321c2) et deuxième (1322c1 et 1322c2) paires de commutateurs à commutation alternée sont intercalées entre les bornes d'entrée différentielle du module de conversion 1320 d'une part et les commutateurs d'entrée 1311 à 1314 d'autre part.

Les troisième (1323c1 et 1323c2) et quatrième (1324c1 et 1324c2) paires de commutateurs à commutation alternée sont intercalées entre les bornes de sortie différentielle du module de conversion 1320 d'une part et les modules $1340_1$,..., $1340_p$ d'autre part.

En outre, la structure du module de conversion $1340_p$ de la Fig. 13A se distingue de la figure 8A en ce qu'elle comporte des cinquième (1325c1 et 1325c2) et sixième (1326c1 et 1326c2) paires de commutateurs à commutation alternée en amont de l'amplificateur opérationnel $1330_p$ et des septième (1327c1 et 1327c2) et huitième (1328c1 et 1328c2) paires de commutateurs à commutation alternée en aval de l'amplificateur opérationnel $1330_p$.

Plus particulièrement, les cinquième (1325c1 et 1325c2) et sixième (1326c1 et 1326c2) paires de commutateurs à commutation alternée sont intercalées entre les bornes d'entrée différentielle de l'amplificateur opérationnel $1330_p$ d'une part, et les deux commutateurs ($1335_p$ et $1335_p$) commandés par la commande $sel^p$ d'autre part.

Les septième (1327c1 et 1327c2) et huitième (1328c1 et 1328c2) paires de commutateurs à commutation alternée sont intercalées entre les bornes de sortie différentielle de l'amplificateur opérationnel $1330_p$ d'une part, et les bornes ($1364_p$-1 et $1364_p$-2) de la capacité de mémorisation $1364_p$ via les commutateurs de transfert ($1361_p$ et $1361'_p$) d'autre part.

La Fig. 13B montre un chronogramme de fonctionnement de l'intégrateur selon le mode de réalisation des Figs. 13 et 13A, pour un exemple avec $p=2$ et $N=2$.

Les signaux représentés en 1390-1,...,1390-10 sont identiques à ceux de la Fig. 7B. En revanche, on notera qu'il existe deux cycles d'intégrations $Int1$ et $Int2$ avant le cycle de transfert $Trf$.

En effet, pour chacun des premier ($w^1$) et second ($w^2$) signaux de multifenêtrage, l'intégration est effectuée deux fois selon un signal d'horloge $clkoffset$ représenté en 1390-0. Une première intégration $Int1$ est réalisée dans une première phase (ou phase positive) correspondant à un signal d'horloge $clkoffset=1$ et une deuxième intégration $Int2$ dans une seconde phase (ou phase négative) correspondant à un signal d'horloge correspondant à $clkoffset=0$ (c'est-à-dire, $clckoffset=1$). Ainsi, le décalage s'applique dans un premier sens lors de la première intégration et dans un second sens opposé au premier lors de la deuxième intégration. Par conséquent, le décalage produit sur le résultat de la première intégration est compensé par celui engendré sur le résultat de la deuxième intégration.

Ensuite, comme en Fig. 7B, le transfert des charges est effectué de manière simultanée et parallèle pendant les signaux de mémorisation $Memo_p$ en 1390-7 et 1390-8 du cycle de transfert. Une fois que tous les résultats d'intégration ont été transférés dans les capacités de mémorisation, le signal de remise à zéro $Reset$ est donné en 1390-6. La lecture des valeurs mémorisées peut se faire, comme en Fig. 7B, pendant le cycle d'intégration suivant, en activant séquentiellement les commandes de lecture $Out_p$, tel qu'indiqué en 1390-9 et 1390-10.

On notera que dans le cas où l'entrée du convertisseur tension/courant est unipolaire (c'est-à-dire, selon les modes de réalisation des Figs. 5, 6, 9, et 10), l'effet de décalage est négligeable par construction et dans ce cas, il n'est pas utile d'ajouter des paires de commutateurs à commutation alternée.

Par ailleurs, dans le cas où la sortie de l'amplificateur opérationnel est unipolaire (c'est-à-dire, selon les modes de réalisation des Figs. 3, 5, 7A, et 11A), des cinquième et sixième paires de commutateurs à commutation alternée selon des première et seconde phases peuvent être montées en amont de l'amplificateur opérationnel de la même manière que dans l'exemple de la Fig. 13B. En revanche, des septième et huitième paires de commutateurs à commutation alternée selon les première et seconde phases sont dans ce cas, montées dans la structure même de l'amplificateur opérationnel de manière à inverser la polarité de la sortie unipolaire par rapport aux bornes d'entrée de l'amplificateur opérationnel.

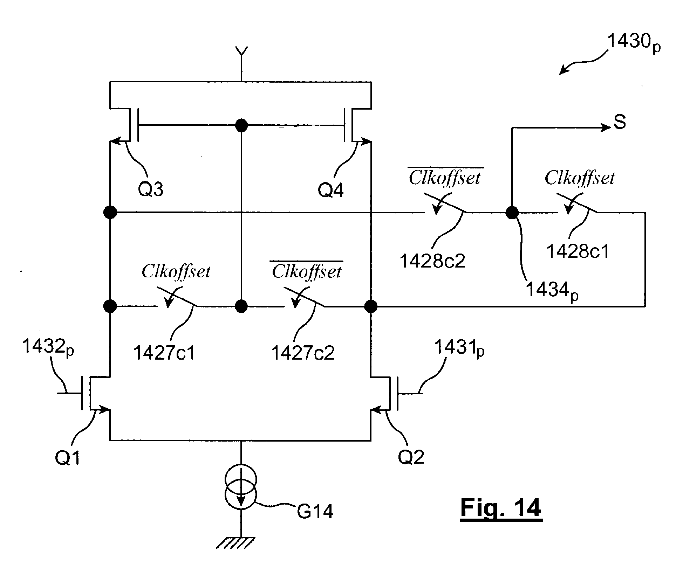

La Fig. 14 illustre à titre d'exemple le montage des septième et huitième paires de commutateurs à commutation alternée dans la structure d'un amplificateur opérationnel à sortie unipolaire.

Cette figure montre de manière schématique un amplificateur opérationnel $1430_p$ comportant une première paire différentielle des transistors d'entrée Q1 et Q2 dont les drains sont respectivement reliés aux drains d'une deuxième paire des transistors Q3 et Q4 d'un miroir de courant et dont les sources sont reliées à une source de courant G14.

Une septième paire (1427c1 et 1427c2) de commutateurs à commutation alternée selon les première et seconde phases est intercalée entre les drains des transistors d'entrée Q1 et Q2 d'une part, et les grilles des transistors Q3 et Q4 du miroir de courant d'autre part.

En outre, une huitième paire (1428c1 et 1428c2) de commutateurs à commutation alternée selon les première et seconde phases est intercalée entre les drains des transistors d'entrée Q1 et Q2 d'une part, et la borne $1434_p$ de sortie unipolaire S de l'amplificateur opérationnel $1430_p$ d'autre part.

Ainsi, lors de la première phase correspondant au signal d'horloge *clkoffset*=1, les grilles des transistors Q3 et Q4 du miroir de courant sont connectées au drain du transistor Q1 de l'entrée inverseuse $1432_p$, tandis que la borne $1434_p$ de sortie unipolaire est connectée au drain du transistor Q2 de l'entrée non-inverseuse $1431_p$.

En revanche, lors de la deuxième phase correspondant au signal d' horloge *clckoffset* =1, les grilles des transistors Q3 et Q4 du miroir de courant sont connectées au drain du transistor Q2 de l'entrée non-inverseuse $1431_p$, tandis que la sortie unipolaire est connectée au drain du transistor Q1 de l'entrée inverseuse $1432_p$.

Par conséquent, le décalage s'applique dans un premier sens lors de la première intégration (première phase) et dans le sens opposé lors de la deuxième intégration (seconde phase).

L'homme du métier comprendra que, comme illustré à titre d'exemple dans les modes de réalisation des Figs. 13, 13A, 13B, et 14, des paires de commutateurs à commutation alternée peuvent être également insérées dans les autres modes de réalisation de la présente invention.

## Revendications

1. Circuit intégrateur à multifenêtrage temporel pour effectuer une pluralité d'opérations d'intégration en parallèle, chaque opération d'intégration étant effectuée de manière cohérente sur une séquence de fenêtres temporelles comprenant au moins une telle fenêtre, ledit circuit comprenant une pluralité de voies d'intégration correspondant chacune à une opération d'intégration, **caractérisé en ce que** lesdites voies d'intégration partagent un même convertisseur tension/courant et des mêmes premiers moyens de commutation pour commuter le signal à intégrer à l'entrée du dit convertisseur, lesdits premiers moyens de commutation étant commandés par un signal de fenêtrage composite obtenu par un OU logique de signaux de multifenêtrage, chaque signal de multifenêtrage comportant une pluralité de fenêtres temporelles disjointes, chaque voie d'intégration comprenant en outre au moins une capacité d'intégration, montée en contre réaction sur un amplificateur opérationnel, et recevant le courant ainsi obtenu via des seconds moyens de commutation pour sélectionner ladite voie.

2. Circuit intégrateur selon la revendication 1, **caractérisé en ce qu'**il comprend en outre des troisièmes moyens de commutation adaptés à transférer la charge intégrée dans chaque capacité d'intégration vers une capacité de mémorisation correspondante, lorsque ladite pluralité d'opérations d'intégration est terminée.

3. Circuit intégrateur selon la revendication 2, **caractérisé en ce qu'**il comprend en outre des quatrièmes moyens de commutation pour commuter les tensions aux bornes des dites capacités de mémorisation vers la sortie du circuit intégrateur, après que le transfert des charges des capacités d'intégration aux capacités de mémorisation correspondantes a été effectué.

4. Circuit intégrateur selon l'une des revendications précédentes, **caractérisé en ce que** les premiers moyens de commutation comportent au moins un premier commutateur commandé par ledit signal de fenêtrage composite et au moins un deuxième commutateur commandé par un signal de fenêtrage composite complémentaire.

5. Circuit intégrateur selon la revendication 4, **caractérisé en ce que** ledit convertisseur a une entrée différentielle et que les premiers moyens de commutation appliquent le signal à intégrer entre les bornes d'entrée du dit convertisseur lorsque le signal de fenêtrage composite est actif et une tension de référence à chacune de ces bornes lorsque le signal de fenêtrage composite complémentaire est actif.

6. Circuit intégrateur selon la revendication 4, **caractérisé en ce que** ledit convertisseur a une entrée unipolaire et que les premiers moyens de commutation appliquent le signal à intégrer à la borne d'entrée du dit convertisseur, lorsque le signal de fenêtrage composite est actif, et une tension de référence à cette borne lorsque le signal de fenêtrage composite complémentaire est actif.

7. Circuit intégrateur selon l'une des revendications précédentes, **caractérisé en ce que** lesdites voies d'intégration partagent le même amplificateur opérationnel (330), les entrées (331, 332) du dit amplificateur étant respectivement reliées aux sorties du dit convertisseur (320), et que chaque voie comprend une capacité de référence disposée entre une tension de référence ($V_{ref}$) et une première entrée (331) de l'amplificateur opérationnel ainsi qu'une capacité d'intégration ($344_p$) montée en contre-réaction entre la sortie (334) de l'amplificateur opérationnel et sa seconde entrée (332).

8.  Circuit intégrateur selon la revendication 7, **caractérisé en ce que** les seconds moyens de commutation ($345_p$, $346_p$) sont commandés par un signal de sélection de voie, et
    qu'ils connectent, lorsque ce signal de sélection est à un niveau logique haut :

    - une première borne de la capacité de référence à la tension de référence ($V_{ref}$) et la seconde borne de cette capacité à la première entrée de l'amplificateur opérationnel ;
    - une première borne ($344_p$-2) de la capacité d'intégration ($344_p$) à la sortie de l'amplificateur opérationnel et la seconde borne ($344_p$-1) de cette capacité à la seconde entrée (332) de l'amplificateur opérationnel ; et

    lorsque le signal de sélection est à un niveau logique bas :

    - déconnectent la première borne de la capacité de référence de la tension de référence et connectent la seconde borne de cette capacité à la tension de référence ;
    - déconnectent la première borne de la capacité d'intégration de la sortie de l'amplificateur opérationnel et connectent la seconde borne de cette capacité à la tension de référence.

9.  Circuit intégrateur selon la revendication 8, **caractérisé en ce qu'**il comprend en outre des moyens de remise à zéro ($341_p$, $343_p$) adaptés à appliquer ladite tension de référence simultanément aux première et seconde bornes de la capacité de référence et aux première et seconde bornes de la capacité d'intégration lorsqu'une remise à zéro est effectuée.

10. Circuit intégrateur selon l'une des revendications 7 à 9, **caractérisé en ce que** les capacités de mémorisation ($364_p$) sont montées en parallèle en sortie (334) de l'amplificateur opérationnel (330), chaque capacité de mémorisation ayant une première borne ($364_p$-1) connectée à ladite sortie via les troisièmes moyens de commutation ($361_p$) et une seconde borne ($364_p$-2) connectée à ladite tension de référence.

11. Circuit intégrateur selon la revendication 10, **caractérisé en ce que** lesdites premières bornes ($364_p$-1) des capacités de mémorisation sont également reliées à la sortie (370) du circuit intégrateur via les quatrièmes moyens de commutation ($365_p$).

12. Circuit intégrateur selon l'une des revendications 1 à 6, **caractérisé en ce que** lesdites voies d'intégration partagent le même amplificateur opérationnel (430), les entrées (431, 432) du dit amplificateur étant respectivement reliées aux sorties du dit convertisseur (420), et que chaque voie comprend une première capacité d'intégration disposée en contre-réaction entre une première sortie (433) et une première entrée (431) de l'amplificateur opérationnel ainsi qu'une seconde capacité d'intégration disposée en contre-réaction entre une seconde sortie (434) et une seconde entrée (432) de l'amplificateur opérationnel.

13. Circuit intégrateur selon la revendication 12, **caractérisé en ce que** les seconds moyens de commutation sont commandés par un signal de sélection de voie, et
    qu'ils connectent, lorsque ce signal de sélection est à un niveau logique haut :

    - une première borne de la première capacité d'intégration à la première sortie (433) de l'amplificateur opérationnel et la seconde borne de cette capacité à la première entrée (431) de l'amplificateur opérationnel ;
    - une première borne de la seconde capacité d'intégration à la seconde sortie (434) de l'amplificateur opérationnel et la seconde borne de cette capacité à la seconde entrée (432) de l'amplificateur opérationnel ; et

    lorsque le signal de sélection est à un niveau logique bas :

    - déconnectent la première borne de la première capacité d'intégration de la première sortie (433) de l'amplificateur opérationnel et connectent la seconde borne de cette capacité à la tension de référence ;
    - déconnectent la première borne de la seconde capacité d'intégration de la seconde sortie (434) de l'amplificateur opérationnel et connectent la seconde borne de cette capacité à la tension de référence.

**14.** Circuit intégrateur selon la revendication 13, **caractérisé en ce qu'**il comprend en outre des moyens de remise à zéro adaptés à appliquer ladite tension de référence simultanément aux première et seconde bornes de la première capacité d'intégration et aux première et seconde bornes de la seconde capacité d'intégration lorsqu'une remise à zéro est effectuée.

**15.** Circuit intégrateur selon la revendication 14, **caractérisé en ce que** les capacités de mémorisation ($464_p$) sont montées en parallèle entre la première et la seconde sorties (433,434) de l'amplificateur opérationnel, chaque capacité de mémorisation ayant une première borne ($464_p$-1) et une seconde borne ($464_p$-1) connectées respectivement à la première et à la seconde sorties (431, 434) de l'amplificateur opérationnel via les troisièmes moyens de commutation ($461_p$).

**16.** Circuit intégrateur selon la revendication 15, **caractérisé en ce que** lesdites premières bornes ($464_p$-1) des capacités de mémorisation sont reliées à une première sortie (471) du circuit intégrateur et lesdites secondes bornes ($464_p$-1) des capacités de mémorisation sont reliées à une seconde sortie (472) du circuit intégrateur, via les quatrièmes moyens de commutation ($465_p$).

**17.** Circuit intégrateur selon l'une des revendications 1 à 6, **caractérisé en ce que** chaque voie d'intégration comprend un amplificateur opérationnel ($730_p$ ; $830_p$), les entrées du dit amplificateur étant respectivement reliées aux sorties du dit convertisseur (720 ; 820) via les seconds moyens de commutation ($735_p$, $735'_p$ ; $835_p$, $835'_p$).

**18.** Circuit intégrateur selon la revendication 17, **caractérisé en ce qu'**une capacité de référence ($744_p$) est disposée entre une tension de référence ($V_{ref}$) et une première entrée ($731_p$) de l'amplificateur opérationnel ainsi qu'une capacité d'intégration ($744'_p$) est disposée en contre-réaction entre la sortie ($734_p$) de l'amplificateur opérationnel et sa seconde entrée ($732_p$).

**19.** Circuit intégrateur selon la revendication 17 ou 18, **caractérisé en ce que** les seconds moyens de commutation ($735_p$, $735'_p$) sont commandés par un signal de sélection de voie ($sel^p$), et que pour chaque voie (p), ils connectent et déconnectent, respectivement lorsque ce signal de sélection est à un niveau logique haut et à un niveau bas, les sorties du convertisseur aux entrées ($731_p$, $732_p$) de l'amplificateur opérationnel ($730_p$).

**20.** Circuit intégrateur selon la revendication 19, **caractérisé en ce qu'**il comprend en outre, pour chaque voie, des moyens de remise à zéro ($741_p$, $741'_p$, $743_p$, $743'_p$), adaptés à appliquer ladite tension de référence ($V_{ref}$) simultanément aux première et seconde bornes ($744_p$-2, $744_p$-1) de la capacité de référence et aux première et seconde bornes ($744'_p$-2, $744'_p$-1) de la capacité d'intégration, lorsqu'une remise à zéro est effectuée.

**21.** Circuit intégrateur selon la revendication 20, **caractérisé en ce qu'**il comprend, pour chaque voie, une capacité de mémorisation ($764_p$) ayant une première borne ($764_p$-1) connectée à la sortie ($734_p$) de l'amplificateur opérationnel ($730_p$), via les troisièmes moyens de commutation ($761_p$), et une seconde borne connectée à ladite tension de référence.

**22.** Circuit intégrateur selon la revendication 21, **caractérisé en ce que** ladite première borne ($764_p$-1) de la capacité de mémorisation est également reliée à la sortie (770) du circuit intégrateur via les quatrièmes moyens de commutation ($765_p$).

**23.** Circuit intégrateur selon la revendication 17, **caractérisé en ce qu'**une première capacité d'intégration ($844_p$) est montée en contre-réaction entre une première sortie ($833_p$) et une première entrée ($831_p$) de l'amplificateur opérationnel ainsi qu'une seconde capacité d'intégration ($844'_p$) est montée en contre-réaction entre une seconde sortie ($834_p$) de l'amplificateur opérationnel et sa seconde entrée ($832_p$).

**24.** Circuit intégrateur selon la revendication 23, **caractérisé en ce que** les seconds moyens de commutation ($835_p$, $835'_p$) sont commandés par un signal de sélection de voie ($sel^p$), et que pour chaque voie ($p$), ils connectent et déconnectent, respectivement lorsque ce signal de sélection est à un niveau logique haut et à un niveau bas, les sorties du convertisseur aux entrées ($831_p$, $832_p$) de l'amplificateur opérationnel ($830_p$).

**25.** Circuit intégrateur selon la revendication 24, **caractérisé en ce qu'**il comprend en outre, pour chaque voie, des moyens de remise à zéro ($841_p$, $841'_p$, $843_p$, $843'_p$), adaptés à appliquer ladite tension de référence ($V_{ref}$) simultanément aux première et seconde bornes ($844_p$-2, $844_p$-1) de la première capacité d'intégration ($844_p$) ainsi qu'aux première et seconde bornes ($844'_p$-2, $844'_p$-1) de la seconde capacité d'intégration ($844'_p$), lorsqu'une remise à zéro est effectuée.

26. Circuit intégrateur selon la revendication 25, **caractérisé en ce qu'**il comprend, pour chaque voie, une capacité de mémorisation ($864_p$) ayant une première borne ($864_p$-1) connectée à la première sortie ($833_p$) de l'amplificateur opérationnel ($830_p$) et une seconde borne ($864_p$-2) connectée à sa seconde sortie ($834_p$), via les troisièmes moyens de commutation ($861_p$).

27. Circuit intégrateur selon la revendication 26, **caractérisé en ce que** lesdites première et seconde bornes ($864_p$-1,$864_p$-2) de la capacité de mémorisation sont également reliées via les quatrièmes moyens de commutation ($865p$, $865'_p$), respectivement à une première sortie (871) et à une seconde sortie (872) du circuit intégrateur.

28. Circuit intégrateur selon l'une des revendications 1 à 6, **caractérisé en ce que** lesdites voies d'intégration sont réparties en une pluralité ($Q$) de sous-ensembles et que les seconds moyens de commutation comprennent des seconds moyens de premier rang ($1135_q$, $1135'_q$) pour sélectionner un sous-ensemble de voies parmi ladite pluralité de sous-ensembles et des second moyens de second rang pour sélectionner une voie au sein d'un sous ensemble et que,
chaque sous-ensemble de voies comprend un amplificateur opérationnel ($1130_q$), les entrées ($1131_q$, $1132q$) du dit amplificateur étant respectivement reliées aux sorties du dit convertisseur (1120) via les second moyens de commutation de premier rang ($1135_p$, $1135'_p$),
les voies d'un sous-ensemble partagent l'amplificateur opérationnel ($1130_q$) relatif à ce sous-ensemble, chaque voie du dit sous-ensemble comprenant une capacité de référence disposée entre une tension de référence et une première entrée de cet amplificateur ainsi qu'une capacité d'intégration montée en contre-réaction entre la sortie ($1134_q$) de cet amplificateur et sa seconde entrée ($1132_q$).

29. Circuit intégrateur selon l'une des revendications 1 à 6, **caractérisé en ce que** lesdites voies d'intégration sont réparties en une pluralité ($Q$) de sous-ensembles et que les seconds moyens de commutation comprennent des seconds moyens de premier rang ($1235_q$, $1235'_q$) pour sélectionner un sous-ensemble de voies parmi ladite pluralité de sous-ensembles et des second moyens de second rang pour sélectionner une voie au sein d'un sous ensemble et que,
chaque sous-ensemble de voies comprend un amplificateur opérationnel ($1230_q$), les entrées ($1231_q$, ($1232q$) du dit amplificateur étant respectivement reliées aux sorties du dit convertisseur (1220) via les second moyens de commutation de premier rang ($1235_p$, $1235'_p$),
les voies d'un sous-ensemble partagent l'amplificateur opérationnel ($1230_q$) relatif à ce sous-ensemble, chaque voie du dit sous-ensemble comprenant une première capacité d'intégration montée en contre-réaction entre une première sortie ($1233_q$) et une première entrée ($1231_q$) de cet amplificateur ainsi qu'une seconde capacité d'intégration montée en contre-réaction entre une seconde sortie ($1234_q$) et sa seconde entrée ($1232_q$).

30. Circuit intégrateur selon au moins l'une quelconque des revendications 1 à 5 et 7 à 29, **caractérisé en ce que** lorsque le convertisseur tension/courant (1320) est à entrée différentielle, le circuit intégrateur comprend des première (1321c1 et 1321c2) et deuxième (1322c1 et 1322c2) paires de commutateurs à commutation alternée selon des première et seconde phases montées en amont dudit convertisseur tension/courant (1320) et des troisième (1323c1 et 1323c2) et quatrième (1324c1 et 1324c2) paires de commutateurs à commutation alternée selon les première et seconde phases montées en aval dudit convertisseur tension/courant (1320).

31. Circuit intégrateur selon au moins l'une quelconque des revendications 1 à 6, 12 à 17, 23 à 27, 29, et 30, **caractérisé en ce que** lorsque l'amplificateur opérationnel ($1330_p$) est à sortie différentielle, le circuit intégrateur comprend des cinquième (1325c1 et 1325c2) et sixième (1326c1 et 1326c2) paires de commutateurs à commutation alternée selon des première et seconde phases montées en amont dudit amplificateur opérationnel ($1330_p$) et des septième (1327c1 et 1327c2) et huitième (1328c1 et 1328c2) paires de commutateurs à commutation alternée selon les première et seconde phases montées en aval dudit amplificateur opérationnel ($1330_p$).

32. Circuit intégrateur selon au moins l'une quelconque des revendications 1 à 4, 6 à 11, 17 à 22, 28, et 30, **caractérisé en ce que** lorsque l'amplificateur opérationnel ($1430_p$) est à sortie unipolaire, le circuit intégrateur comprend des cinquième et sixième paires de commutateurs à commutation alternée selon des première et seconde phases montées en amont dudit amplificateur opérationnel et des septième (1427c1 et 1427c2) et huitième (1428c1 et 1728c2) paires de commutateurs à commutation alternée selon les première et seconde phases montées dans la structure de l'amplificateur opérationnel ($1430_p$) pour inverser la polarité de ladite sortie unipolaire par rapport aux bornes d'entrée dudit amplificateur opérationnel.

**Patentansprüche**

1. Integratorschaltung mit zeitlicher Mehrfensterfunktion zur parallelen Durchführung einer Mehrzahl von Integrationsoperationen, wobei jede Integrationsoperation in kohärenter Weise auf einer Sequenz von Zeitfenstern durchgeführt wird, die wenigstens ein derartiges Fenster umfasst, wobei die Schaltung eine Mehrzahl von Integrationskanälen umfasst, die jeweils einer Integrationsoperation entsprechen, **dadurch gekennzeichnet, dass** die Integrationskanäle ein und denselben Spannungs-/Stromwandler und gleiche erste Schaltmittel teilen, um das zu integrierende Signal am Eingang des Wandlers zu schalten, wobei die ersten Schaltmittel durch ein Mehrfenstermischsignal gesteuert werden, das durch ein logisches ODER von Mehrfensterfunktionssignalen erhalten wird, wobei jedes Mehrfensterfunktionssignal eine Mehrzahl von getrennten Zeitfenstern umfasst, wobei jeder Integrationskanal ferner wenigstens eine Integrationskapazität umfasst, die in Gegenreaktion auf einen Operationsverstärker montiert ist und den derart erhaltenen Strom über zweite Schaltmittel empfängt, um den Kanal auszuwählen.

2. Integratorschaltung nach Anspruch 1, **dadurch gekennzeichnet, dass** sie ferner dritte Schaltmittel umfasst, die dazu ausgelegt sind, die in jeder Integrationskapazität integrierte Ladung an eine entsprechende Speicherkapazität zu übertragen, wenn die Mehrzahl von Integrationsoperationen beendet ist.

3. Integratorschaltung nach Anspruch 2, **dadurch gekennzeichnet, dass** sie ferner vierte Schaltmittel umfasst, um die Spannungen an den Anschlüssen der Speicherkapazitäten hin zum Ausgang der Integratorschaltung umzuschalten, nachdem die Übertragung der Ladungen von den Integrationskapazitäten zu den entsprechenden Speicherkapazitäten erfolgt ist.

4. Integratorschaltung nach einem der vorhergehenden Ansprüche, **dadurch gekennzeichnet, dass** die ersten Schaltmittel wenigstens einen ersten Schalter umfassen, der durch das Fensterfunktionsmischsignal gesteuert wird, sowie wenigstens einen zweiten Schalter, der durch ein komplementäres Fensterfunktionsmischsignal gesteuert wird.

5. Integratorschaltung nach Anspruch 4, **dadurch gekennzeichnet, dass** der Wandler einen differenziellen Eingang hat, und dass die ersten Schaltmittel das zu integrierende Signal zwischen den Eingangsanschlüssen des Wandlers anlegen, wenn das Fensterfunktionsmischsignal aktiv ist, und eine Referenzspannung an jedem dieser Anschlüsse anlegen, wenn das komplementäre Fensterfunktionsmischsignal aktiv ist.

6. Integratorschaltung nach Anspruch 4, **dadurch gekennzeichnet, dass** der Wandler einen unipolaren Eingang hat, und dass die ersten Schaltmittel das zu integrierende Signal an den Eingangsanschluss des Wandlers anlegen, wenn das Fensterfunktionsmischsignal aktiv ist, und eine Referenzspannung an diesen Anschluss anlegen, wenn das komplementäre Fensterfunktionsmischsignal aktiv ist.

7. Integratorschaltung nach einem der vorhergehenden Ansprüche, **dadurch gekennzeichnet, dass** die Integrationskanäle denselben Operationsverstärker (330) teilen, wobei die Eingänge (331, 332) des Verstärkers jeweils mit den Ausgängen des Wandlers (320) verbunden sind, und dass jeder Kanal eine Referenzkapazität umfasst, die zwischen einer Referenzspannung ($V_{ref}$) und einem ersten Eingang (331) des Operationsverstärkers angeordnet ist, sowie eine Integrationskapazität ($344_p$), die in Gegenreaktion zwischen dem Ausgang (334) des Operationsverstärkers und seinem zweiten Eingang (332) montiert ist.

8. Integratorschaltung nach Anspruch 7, **dadurch gekennzeichnet, dass** die zweiten Schaltmittel ($345_p$, $346_p$) durch ein Kanalauswahlsignal gesteuert werden, und dass sie folgendes verbinden, wenn dieses Auswahlsignal auf einem hohen Logikpegel ist:

   - einen ersten Anschluss der Referenzkapazität mit der Referenzspannung ($V_{ref}$) und den zweiten Anschluss dieser Kapazität mit dem ersten Eingang des Operationsverstärkers;
   - einen ersten Anschluss ($344_p$-2) der Integrationskapazität ($344_p$) mit dem Ausgang des Operationsverstärkers, und den zweiten Anschluss ($344_p$-1) dieser Kapazität mit dem zweiten Eingang (332) des Operationsverstärker; und

   wenn das Auswahlsignal auf einem niedrigen Logikpegel ist:

   - sie den ersten Anschluss der Referenzkapazität von der Referenzspannung trennen und den zweiten Anschluss dieser Kapazität mit der Referenzspannung verbinden;
   - sie den ersten Anschluss der Integrationskapazität von dem Ausgang des Operationsverstärkers trennen und den zweiten Anschluss dieser Kapazität mit der Referenzspannung verbinden.

9. Integratorschaltung nach Anspruch 8, **dadurch gekennzeichnet, dass** sie ferner Nullrückstellmittel ($341_p$, $343_p$) umfasst, die dazu ausgelegt sind, die Referenzspannung gleichzeitig an den ersten und den zweiten Anschluss der Referenzkapazität und an den ersten und den zweiten Anschluss der Integrationskapazität anzulegen, wenn eine Rückstellung auf null durchgeführt wird.

10. Integratorschaltung nach einem der Ansprüche 7-9, **dadurch gekennzeichnet, dass** die Speicherkapazitäten ($364_p$) parallel am Ausgang (334) des Operationsverstärkers (330) montiert sind, wobei jede Speicherkapazität einen ersten Anschluss ($364_p$-1) hat, der über die dritten Schaltmittel ($361_p$) an den Ausgang angeschlossen ist, sowie einen zweiten Anschluss ($364_p$-2), der an die Referenzspannung angeschlossen ist.

11. Integratorschaltung nach Anspruch 10, **dadurch gekennzeichnet, dass** die ersten Anschlüsse ($364_p$-1) der Speicherkapazitäten ferner mit dem Ausgang (370) der Integratorschaltung über die vierten Schaltmittel ($365_p$) verbunden sind.

12. Integratorschaltung nach einem der Ansprüche 1 bis 6, **dadurch gekennzeichnet, dass** die Integrationskanäle denselben Operationsverstärker (430) teilen, wobei die Eingänge (431, 432) des Verstärkers jeweils mit den Ausgängen des Wandlers (420) verbunden sind, und dass jeder Kanal eine erste Integrationskapazität umfasst, die in Gegenreaktion zwischen einem ersten Ausgang (433) und einem ersten Eingang (431) des Operationsverstärkers angeordnet ist, sowie eine zweite Integrationskapazität, die in Gegenreaktion zwischen einem zweiten Ausgang (434) und einem zweiten Eingang (432) des Operationsverstärkers angeordnet ist.

13. Integratorschaltung nach Anspruch 12, **dadurch gekennzeichnet, dass** die zweiten Schaltmittel durch ein Kanalauswahlsignal gesteuert werden, und dass sie folgendes verbinden, wenn dieses Auswahlsignal auf einem hohen Logikpegel ist:

   - einer ersten Anschluss der ersten Integrationskapazität mit dem ersten Ausgang (433) des Operationsverstärkers, und den zweiten Anschluss dieser Kapazität mit dem ersten Eingang (431) des Operationsverstärkers;
   - einen ersten Anschluss der zweiten Integrationskapazität mit dem zweiten Ausgang (434) des Operationsverstärkers, und den zweiten Anschluss dieser Kapazität mit dem zweiten Eingang (432) des Operationsverstärkers; und

   wenn das Auswahlsignal auf einem niedrigen Logikpegel ist:

   - sie den ersten Anschluss der ersten Integrationskapazität von dem ersten Ausgang (433) des Operationsverstärkers trennen und den zweiten Anschluss dieser Kapazität mit der Referenzspannung verbinden;
   - sie den ersten Anschluss der zweiten Integrationskapazität von dem zweiten Ausgang (434) des Operationsverstärkers trennen und den zweiten Anschluss dieser Kapazität mit der Referenzspannung verbinden.

14. Integratorschaltung nach Anspruch 13, **dadurch gekennzeichnet, dass** sie ferner Nullrückstellmittel umfasst, die dazu ausgelegt sind, die Referenzspannung gleichzeitig an den ersten und den zweiten Anschluss der ersten Integrationskapazität und an den ersten und den zweiten Anschluss der zweiten Integrationskapazität anzulegen, wenn eine Rückstellung auf null durchgeführt wird.

15. Integratorschaltung nach Anspruch 14, **dadurch gekennzeichnet, dass** die Speichkapazitäten ($464_p$) parallel zwischen dem ersten und dem zweiten Ausgang (433, 434) des Operationsverstärkers montiert sind, wobei jede Speicherkapazität einen ersten Anschluss ($464_p$-1) und einen zweiten Anschluss ($464_p$-1) hat, die an den ersten bzw. an den zweiten Ausgang (431, 434) des Operationsverstärkers über die dritten Schaltmittel ($461_p$) angeschlossen sind.

16. Integratorschaltung nach Anspruch 15, **dadurch gekennzeichnet, dass** die ersten Anschlüsse ($464_p$-1) der Speicherkapazitäten mit einem ersten Ausgang (471) der Integratorschaltung verbunden sind, und dass die zweiten Anschlüsse ($464_p$-1) der Speicherkapazitäten mit einem zweiten Ausgang (472) der Integratorschaltung verbunden sind, und zwar über die vierten Schaltmittel ($465_p$).

17. Integratorschaltung nach einem der Ansprüche 1 bis 6, **dadurch gekennzeichnet, dass** jeder Integrationskanal einen Operationsverstärker ($730_p$; $830_p$) umfasst, wobei die Eingänge des Verstärkers jeweils mit den Ausgängen des Wandlers (720; 820) über die zweiten Schaltmittel (735$_p$, 735'$_p$; 835$_p$, 835'$_p$) verbunden sind.

18. Integratorschaltung nach Anspruch 17, **dadurch gekennzeichnet, dass** eine Referenzkapazität (744$_p$) zwischen einer Referenzspannung (V$_{ref}$) und einem ersten Eingang (731$_p$) des Operationsverstärkers angeordnet ist, sowie eine Integrationskapazität (744'$_p$) in Gegenreaktion zwischen dem Ausgang (734$_p$) des Operationsverstärkers und seinem zweiten Eingang (732$_p$) angeordnet ist.

19. Integratorschaltung nach Anspruch 17 oder 18, **dadurch gekennzeichnet, dass** die zweiten Schaltmittel (735$_p$, 735'$_p$) durch ein Kanalauswahlsignal (sel$^p$) gesteuert werden, und dass sie für jeden Kanal (p) die Ausgänge des Wandlers mit den Eingängen (731$_p$, 732$_p$) des Operationsverstärkers (730$_p$) verbinden oder von ihnen trennen, wenn dieses Auswahlsignal auf einem hohen bzw. auf einem niedrigen Logikpegel ist.

20. Integratorschaltung nach Anspruch 19, **dadurch gekennzeichnet, dass** sie ferner für jeden Kanal Nullrückstellmittel (741$_p$, 741'$_p$, 743$_p$, 743') umfasst, die dazu ausgelegt sind, die Referenzspannung (V$_{ref}$) gleichzeitig an den ersten und den zweiten Anschluss (744$_p$-2, 744$_p$-1) der Referenzkapazität und an den ersten und den zweiten Anschluss (744'$_p$-2, 744'$_p$-1) der Integrationskapazität anzulegen, wenn eine Rückstellung auf null durchgeführt wird.

21. Integratorschaltung nach Anspruch 20, **dadurch gekennzeichnet, dass** sie für jeden Kanal eine Speicherkapazität (764$_p$) umfasst, die einen ersten Anschluss (764$_p$-1) hat, der an den Ausgang (734$_p$) des Operationsverstärkers (730$_p$) über die dritten Schaltmittel (761$_p$) angeschlossen ist, sowie einen zweiten Anschluss, der an die Referenzspannung angeschlossen ist.

22. Integratorschaltung nach Anspruch 21, **dadurch gekennzeichnet, dass** der erste Anschluss (764$_p$-1) der Speicherkapazität ferner über die vierten Schaltmittel (765$_p$) mit dem Ausgang (770) der Integratorschaltung verbunden ist.

23. Integratorschaltung nach Anspruch 17, **dadurch gekennzeichnet, dass** eine erste Integrationskapazität (844$_p$) in Gegenreaktion zwischen einem ersten Ausgang (833$_p$) und einem ersten Eingang (831$_p$) des Operationsverstärkers montiert ist, sowie eine zweite Integrationskapazität (844'$_p$)in Gegenreaktion zwischen einem zweiten Ausgang (834$_p$) des Operationsverstärkers und seinem zweiten Eingang (832$_p$) montiert ist.

24. Integratorschaltung nach Anspruch 23, **dadurch gekennzeichnet, dass** die zweiten Schaltmittel (835$_p$, 835'$_p$) durch ein Kanalauswahlsignal (sel$^p$) gesteuert werden, und dass sie für jeden Kanal (p) die Ausgänge des Wandlers mit den Eingängen (831$_p$, 832$_p$) des Operationsverstärkers (830$_p$) verbinden oder von ihnen trennen, wenn dieses Auswahlsignal auf einem hohen bzw. einem niedrigen Logikpegel ist.

25. Integratorschaltung nach Anspruch 24, **dadurch gekennzeichnet, dass** sie ferner für jeden Kanal Nullrückstellmittel (841$_p$, 841'$_p$, 843$_p$, 843'$_p$) umfasst, die dazu ausgelegt sind, die Referenzspannung (V$_{ref}$) gleichzeitig an den ersten und den zweiten Anschluss (844$_p$-2, 844$_p$-1) der ersten Integrationskapazität (844$_p$) sowie an den ersten und den zweiten Anschluss (844'$_p$-2, 844'$_p$-1) der zweiten Integrationskapazität (844'$_p$) anzulegen, wenn eine Rückstellung auf null durchgeführt wird.

26. Integratorschaltung nach Anspruch 25, **dadurch gekennzeichnet, dass** sie für jeden Kanal eine Speicherkapazität (864$_p$) umfasst, die einen ersten Anschluss (864$_p$-1) hat, der an den ersten Ausgang (833$_p$) des Operationsverstärkers (830$_p$) angeschlossen ist, sowie einen zweiten Anschluss (864$_p$-2), der an seinen zweiten Ausgang (834$_p$) angeschlossen ist, und zwar über die dritten Schaltmittel (861$_p$).

27. Integratorschaltung nach Anspruch 26, **dadurch gekennzeichnet, dass** der erste und der zweite Anschluss (864$_p$-1, 864$_p$-2) der Speicherkapazität ferner über die vierten Schaltmittel (865$_p$, 865'$_p$) mit einem ersten Ausgang (871) bzw. mit einem zweiten Ausgang (872) der Integratorschaltung verbunden sind.

28. Integratorschaltung nach einem der Ansprüche 1 bis 6, **dadurch gekennzeichnet, dass** die Integrationskanäle in eine Mehrzahl (Q) von Untergruppen aufgeteilt sind, und dass die zweiten Schaltmittel zweite Mittel mit erstem Rang (1135q, 1135'$_q$) umfassen, um eine Untergruppe von Kanälen aus der Mehrzahl von Untergruppen auszuwählen, sowie zweite Mittel mit zweitem Rang, um einen Kanal innerhalb einer Untergruppe auszuwählen, und dass jede Untergruppe von Kanälen einen Operationsverstärker (1130q) umfasst, wobei die Eingänge (1131$_q$, 1132q) des Verstärkers jeweils mit den Ausgängen des Wandlers (1120) über die zweiten Schaltmittel mit erstem Rang (1135$_p$, 865'$_p$) verbunden sind,

wobei die Kanäle einer Untergruppe den Operationsverstärker (1130q) bezüglich dieser Untergruppe teilen, wobei jeder Kanal der Untergruppe eine Referenzkapazität umfasst, die zwischen einer Referenzspannung und einem ersten Eingang dieses Verstärkers angeordnet ist, sowie eine Integrationskapazität, die in Gegenreaktion zwischen dem Ausgang (1134q) dieses Verstärkers und seinem zweiten Eingang (1132q) montiert ist.

29. Integratorschaltung nach einem der Ansprüche 1 bis 6 **dadurch gekennzeichnet, dass** die Integrationskanäle in eine Mehrzahl (Q) von Untergruppen aufgeteilt sind, und dass die zweiten Schaltmittel zweite Mittel mit erstem Rang $(1235q, 1235'_q)$ umfassen, um eine Untergruppe von Kanälen aus der Mehrzahl von Untergruppen auszuwählen, sowie zweite Mittel mit zweitem Rang, um einen Kanal innerhalb einer Untergruppe auszuwählen, und dass jede Untergruppe von Kanälen einen Operationsverstärker (1230q) umfasst, wobei die Eingänge (1231q, 1232q) des Verstärkers jeweils mit den Ausgängen des Wandlers (1220) über die zweiten Schaltmittel mit erstem Rang $(1235_p, 1235'_p)$ verbunden sind,
wobei die Kanäle einer Untergruppe den Operationsverstärker (1230q) bezüglich dieser Untergruppe teilen, wobei jeder Kanal der Untergruppe eine erste Integrationskapazität umfasst, die in Gegenreaktion zwischen einem ersten Ausgang (1233q) und einem ersten Eingang (1231 q) dieses Verstärkers montiert ist, sowie eine zweite Integrationskapazität, die in Gegenreaktion zwischen einem zweiten Ausgang (1234q) und seinem zweiten Eingang (1232q) montiert ist.

30. Integratorschaltung nach wenigstens einem der Ansprüche 1 bis 5 und 7 bis 29, **dadurch gekennzeichnet, dass** dann, wenn der Spannungs-/Stromwandler (1320) mit einem differenziellen Eingang versehen ist, die Integratorschaltung ein erstes (1321c1 und 1321 c2) und ein zweites (1322c1 und 1322c2) Paar von Schaltern zur alternierenden Schaltung gemäß ersten und zweiten Phasen umfasst, die stromaufwärts des Spannungs-/Stromwandlers (1320) montiert sind, sowie ein drittes (1323c1 und 1323c2) und ein viertes (1324c1 und 1324c2) Paar von Schaltern zur alternierenden Schaltung gemäß ersten und zweiten Phasen, die stromabwärts des Spannungs-/Stromwandlers (1320) montiert sind.

31. Integratorschaltung nach wenigstens einem der Ansprüche 1 bis 6, 12 bis 17, 23 bis 27, 29, und 30, **dadurch gekennzeichnet, dass** dann, wenn der Operationsverstärker $(1330_p)$ mit einem differenziellen Ausgang versehen ist, die Integratorschaltung ein fünftes (1325c1 und 1325c2) und ein sechstes (1326c1 und 1326c2) Paar von Schaltern zur alternierenden Schaltung gemäß ersten und zweiten Phasen umfasst, die stromaufwärts des Operationsverstärkers $(1330_p)$ montiert sind, sowie ein siebtes (1327c1 und 1327c2) und ein achtes (1328c1 und 1328c2) Paar von Schaltern zur alternierenden Schaltung gemäß ersten und zweiten Phasen, die stromabwärts des Operationsverstärkers $(1330_p)$ montiert sind.

32. Integratorschaltung nach wenigstens einem der Ansprüche 1 bis 4, 6 bis 11, 17 bis 22, 28, und 30, **dadurch gekennzeichnet, dass** dann, wenn der Operationsverstärker $(1430_p)$ mit einem unipolaren Ausgang versehen ist, die Integratorschaltung ein fünftes und ein sechstes Paar von Schaltern zur alternierenden Schaltung gemäß ersten und zweiten Phasen umfasst, die stromaufwärts des Operationsverstärkers montiert sind, sowie ein siebtes (1427c1 und 1427c2) und ein achtes (1428c1 und 1728c2) Paar von Schaltern zur alternierenden Schaltung gemäß ersten und zweiten Phasen, die in der Struktur des Operationsverstärkers $(1430_p)$ montiert sind, um die Polarität des unipolaren Ausgangs bezüglich der Eingangsanschlüsse des Operationsverstärkers zu invertieren.

**Claims**

1. An integrator circuit with multiple time window functions for carrying out a plurality of integration operations in parallel, each integration operation being carried out in a coherent manner over a sequence of time windows including at least one such window, said circuit comprising a plurality of integration paths each corresponding to an integration operation, **characterized in that** said integration paths share a same voltage/current converter and same first switching means for switching the signal to be integrated at the input of said converter, said first switching means being controlled by a composite window function signal obtained by an OR logic of multiple window function signals, each multiple window function signal comprising a plurality of disjoint time windows, each integration path further including at least one integration capacitor mounted in counter-reaction to a functional amplifier and receiving the resulting current via second switching means for selecting said path.

2. The integrator circuit according to claim 1, **characterized in that** it also comprises third switching means adapted to transferring the integrated charge in each integration capacitor towards a corresponding storage capacitor, when said plurality of integration operations are finished.

3. The integrator circuit according to claim 2, **characterized in that** it also comprises a fourth switching means to switch the voltages at the terminals of said storage capacitors towards the output of the integrator circuit, after the transfer of charges from the integration capacitors to the corresponding storage capacitors has been done.

4. The integrator circuit according to one of the preceding claims, **characterized in that** the first switching means comprise at least a first switch controlled by said composite window function signal, and at least a second switch controlled by a complementary composite window function signal.

5. The integrator circuit according to claim 4, **characterized in that** said converter has a differential input and **in that** the first switching means applies the signal to be integrated between the input terminals of said converter when the composite window function signal is active and a reference voltage at each of these terminals when the complementary composite window function signal is active.

6. The integrator circuit according to claim 4, **characterized in that** said converter has a single-pole input and **in that** the first switching means applies the signal to be integrated to the input terminal of said converter, when the composite window function signal is active, and a reference voltage at said terminal when the complementary composite window function signal is active.

7. The integrator circuit according to one of the preceding claims, **characterized in that** said integration paths share the same functional amplifier (330), the inputs (331, 332) of said amplifier respectively being connected to the outputs of said converter (320), and **in that** each path comprises a reference capacitor disposed between a reference voltage $(V_{ref})$ and a first input (331) of the functional amplifier as well as an integration capacitor $(344_p)$ mounted in counter-reaction between the output (334) of the functional amplifier and its second input (332).

8. The integrator circuit according to claim 7, **characterized in that** the second switching means $(345_p, 346_p)$ is controlled by a path selection signal, and
**in that** it connects, when this selection signal is at a high logic level:

   - a first terminal of the reference capacitor to the reference voltage $(V_{ref})$ and the second terminal of said capacitor to the first input of the functional amplifier;
   - a first terminal $(344_p\text{-}2)$ of the integration capacitor $(344_p)$ to the output of the functional amplifier and the second terminal $(344_p\text{-}1)$ of this capacitor to the second input (332) of the functional amplifier; and

   when the selection signal is at a low logic level:

   - disconnects the first terminal of the reference capacitor from the reference voltage and connects the second terminal of this capacitor to the reference voltage;
   - disconnects the first terminal of the integration capacitor from the output of the functional amplifier and connects the second terminal of this capacitor to the reference voltage.

9. The integrator circuit according to claim 8, **characterized in that** it also comprises reset means $(341_p, 343_p)$ adapted to applying said reference voltage simultaneously to the first and second terminals of the reference capacitor and to the first and second terminals of the integration capacitor when a reset is done.

10. The integrator circuit according to one of claims 7 to 9, **characterized in that** the storage capacitors $(364_p)$ are typically mounted in parallel at the output (334) of the functional amplifier (330), each storage capacitor having a first terminal $(364_p\text{-}1)$ connected to said output via the third switching means $(361_p)$ and a second terminal $(364_p\text{-}2)$ connected to said reference voltage.

11. The integrator circuit according to claim 10, **characterized in that** said first terminals $(364_p\text{-}1)$ of the storage capacitors are also connected to the output (370) of the integrator circuit via the fourth switching means $(365_p)$.

12. The integrator circuit according to one of claims 1 to 6, **characterized in that** said integration paths share the same functional amplifier (430), the inputs (431, 432) of said amplifier respectively being connected to the outputs of said converter (420), and **in that** each path comprises a first integration capacitor disposed in counter-reaction between a first output (433) and a first input (431) of the functional amplifier as well as a second integration capacitor disposed in counter-reaction between a second output (434) and a second input (432) of the functional amplifier.

13. The integrator circuit according to claim 12, **characterized in that** the second switching means is advantageously controlled by a path selection signal, and
**in that** it connects, when this selection signal is at a high logic level:

> - a first terminal of the first integration capacitor to the first output (433) of the functional amplifier and the second terminal of this capacitor to the first input (431) of the functional amplifier;
> - a first terminal of the second integration capacitor to the second output (434) of the functional amplifier and the second terminal of this capacitor to the second input (432) of the functional amplifier; and

when the selection signal is at a low logic level:

> - disconnects the first terminal of the first integration capacitor from the first output (433) of the functional amplifier and connects the second terminal of this capacitor to the reference voltage;
> - disconnects the first terminal of the second integration capacitor from the second output (434) of the functional amplifier and connects the second terminal of this capacitor to the reference voltage.

14. The integrator circuit according to claim 13, **characterized in that** it also comprises reset means adapted to apply said reference voltage simultaneously to the first and second terminals of the first integration capacitor and the first and second terminals of the second integration capacitor when a reset is done.

15. The integrator circuit according to claim 14, **characterized in that** the storage capacitors ($464_p$) are mounted in parallel between the first and second outputs (433, 434) of the functional amplifier, each storage capacitor having a first terminal ($464_p$-1) and a second terminal ($464_p$-1) respectively connected to the first and second outputs (431, 434) of the functional amplifier via the third switching means ($461_p$).

16. The integrator circuit according to claim 15, **characterized in that** said first terminals ($464_p$-1) of the storage capacitors are connected to a first output (471) of the integrator circuit and said second terminals ($464_p$-1) of the storage capacitors are connected to a second output (472) of the integrator circuit, via the fourth switching means ($465_p$).

17. The integrator circuit according to one of claims 1 to 6, **characterized in that** each integration path comprises a functional amplifier ($730_p$ ; $830_p$), the inputs of said amplifier respectively being connected to the outputs of said converter (720; 820) via the second switching means ($735_p$, $735'_p$ ; $835_p$, $835'_p$).

18. The integrator circuit according to claim 17, **characterized in that** a reference capacitor ($744_p$) is disposed between a reference voltage ($V_{ref}$) and a first input ($731_p$) of the functional amplifier and an integration capacitor ($744'_p$) is disposed in counter-reaction between the output ($734_p$) of the functional amplifier and its second input ($732_p$).

19. The integrator circuit according to claim 17 or 18, **characterized in that** the second switching means ($735_p$, $735'_p$) is then advantageously controlled by a path selection signal *(sel^p)*, and **in that** for each path (p), it connects and disconnects, when this selection signal is at a high logic level and a low logic level, respectively, the outputs of the converter to the inputs ($731_p$, $732_p$) of the functional amplifier ($730_p$).

20. The integrator circuit according to claim 19, **characterized in that** it also comprises, for each path, reset means ($741_p$, $741'_p$, $743_p$, $743'_p$) adapted to apply said reference voltage ($V_{ref}$) simultaneously to the first and second terminals ($744_p$-2, $744_p$-1) of the reference capacitor and to the first and second terminals ($744'_p$-2, $744'_p$-1) of the integration capacitor, when a reset is done.

21. The integrator circuit according to claim 20, **characterized in that** it comprises, for each path, a storage capacitor ($764_p$) having a first terminal ($764_p$-1) connected to the output ($734_p$) of the functional amplifier ($730_p$), via the third switching means ($761_p$), and a second terminal connected to said reference voltage.

22. The integrator circuit according to claim 21, **characterized in that** said first terminal ($764_p$-1) of the storage capacitor is also connected to the output (770) of the integrator circuit via the fourth switching means ($765_p$).

23. The integrator circuit according to claim 17, **characterized in that** a first integration capacitor ($844_p$) is mounted in counter-reaction between a first output ($833_p$) and a first input ($831_p$) of the functional amplifier as well as a second integration capacitor ($844'_p$) is mounted in counter-reaction between a second output ($834_p$) of the functional amplifier and its second input ($832_p$).

24. The integrator circuit according to claim 23, **characterized in that** the second switching means ($835_p$, $835'_p$) is controlled by a path selection signal *(selp)* and, for each path (p), it connects and disconnects when this selection signal is at a high logic level and at a low level, respectively, the outputs of the converter to the inputs ($831_p$, $832_p$) of the functional amplifier ($830_p$).

25. The integrator circuit according to claim 24, **characterized in that** it comprises, for each path, reset means ($841_p$, $841'_p$, $843_p$, $843'_p$), adapted to apply said reference voltage ($V_{ref}$) simultaneously to the first and second terminals ($844_p$-2, $844_p$-1) of the first integration capacitor ($844_p$) as well as the first and second terminals ($844'_p$-2, $844'_p$-1) of the second integration capacitor ($844'_p$), when a reset is done.

26. The integrator circuit according to claim 25, **characterized in that** it comprises, for each path, a storage capacitor ($864_p$) having a first terminal ($864_p$-1) connected to the first output ($833_p$) of the functional amplifier ($830_p$) and a second terminal ($864_p$-2) connected to its second output ($834_p$), via the third switching means ($861_p$).

27. The integrator circuit according to claim 26, **characterized in that** said first and second terminals ($864p$-1,$864_p$-2) of the storage capacitor are also connected via the fourth switching means ($865_p$,$865'_p$), respectively to a first output (871) and to a second output (872) of the integrator circuit.

28. The integrator circuit according to one of claims 1 to 6, **characterized in that** said integration paths are distributed in a plurality (Q) of subassemblies and **in that** the second switching means comprises a first rank second means ($1135q$, $1135'_q$) for selecting a subassembly of paths among said plurality of subassemblies, and second rank second means for selecting a path within a subassembly, and **in that**
each subassembly of paths comprises a functional amplifier ($1130_q$), the inputs ($1131q$, $1132q$) of said amplifier respectively being connected to the outputs of said converter (1120) via the first rank second switching means ($1135_p$, $1135'_p$),
the paths of a subassembly sharing the functional amplifier (1130q) relative to this subassembly, each path of said subassembly comprising a reference capacitor disposed between a reference voltage and a first input of said amplifier as well as an integration capacitor mounted in counter-reaction between the output (1134q) of said amplifier and its second input ($1132_q$).

29. The integrator circuit according to one of claims 1 to 6, **characterized in that** said integration paths (Q) are distributed in a plurality of subassemblies and the second switching means comprises a first rank second means ($1235q$, $1235'_q$) for selecting a subassembly of paths among said plurality of subassemblies and a second rank second means for selecting a path within a subassembly, and **in that**
each subassembly of paths comprises a functional amplifier ($1230_q$), the inputs ($1231_q$, (1232q) of said amplifier being respectively connected to the outputs of said converter (1220) via the first rank second switching means ($1235_p$, $1235'_p$) ,
the paths of a subassembly share the functional amplifier (1230q) relative to that subassembly, each path of said subassembly comprising a first integration capacitor mounted in counter-reaction between a first output (1233q) and a first input (1231q) of this amplifier as well as a second integration capacitor mounted in counter-reaction between a second output (1234q) and its second input ($1232_q$).

30. The integrator circuit according to at least any one of claims 1 to 5 and 7 to 29, **characterized in that** when the voltage/current converter (1320) has a differential input, the integrator circuit comprises first (1321c1 and 1321c2) and second (1322c1 and 1322c2) pairs of switches with alternating switching of the first and second phases mounted upstream of said voltage/current converter (1320) and third (1323c1 and 1323c2) and fourth (1324c1 and 1324c2) pairs of switches with alternating switching according to the first and second phases mounted downstream of said voltage/current converter (1320).

31. The integrator circuit according to at least any one of claims 1 to 6, 12 to 17, 23 to 27, 29, and 30, **characterized in that** when the functional amplifier ($1330_p$) has a differential output, the integrator circuit comprises fifth (1325c1 and 1325c2) and sixth (1326c1 and 1326c2) pairs of switches with alternating switching according to the first and second phases mounted upstream of said functional amplifier ($1330_p$) and seventh (1327c1 and 1327c2) and eighth (1328c1 and 1328c2) pairs of switches with alternating switching according to the first and second phases mounted downstream of said functional amplifier ($1330_p$).

32. The integrator circuit according to at least any one of claims 1 to 4, 6 to 11, 17 to 22, 28, and 30, **characterized in that** when the functional amplifier ($1430_p$) has a single-pole output, the integrator circuit comprises fifth and sixth pairs of switches with alternating switching according to the first and second phases mounted upstream of said functional amplifier and seventh (1427c1 and 1427c2) and eighth (1428c1 and 1728c2) pairs of switches with alternating switching according to the first and second phases mounted in the structure of the functional amplifier ($1430_p$) to reverse the polarity of said single-pole output relative to the input terminals of said functional amplifier.

**Fig. 1A**

**Fig. 1B**

$$T_s = N_f T_f$$

$$c_k(n) = 7,1,4,7$$

$$T_f$$

$$T_c$$

EP 2 368 134 B1

**Fig. 2A**

**Fig. 2B**

EP 2 368 134 B1

**Fig. 3**

**Fig. 3A**

EP 2 368 134 B1

**Fig. 3B**

**Fig. 4**

**Fig. 5**

**Fig. 6**

EP 2 368 134 B1

**Fig. 7**

EP 2 368 134 B1

$740_p$

$765_p$ — $Out_p$

$764_p$-1 — $Memo_p$ — $764_p$-2 — $V_{ref}$

$761_p$ — $764_p$

$734_p$

$744_p$ — $Reset$ — $V_{ref}$

$741_p$ — $Reset$ — $743_p$ — $744_p$-1 — $744_p$-2 — $V_{ref}$

$730_p$

$744'_p$ — $744'_p$-2 — $744'_p$-1 — $Reset$ — $743'_p$ — $741'_p$ — $V_{ref}$ — $Reset$

$731_p$ — $732_p$

$735_p$ — $sel^p$ — $sel^p$ — $735'_p$

**Fig. 7A**

35

**Fig. 7B**

**Fig. 8**

Fig. 8A

EP 2 368 134 B1

$V_{in}$

$W(t)$

91

$\overline{W}(t)$

92

$V_{ref}$

$90$

$90_1$

$90_P$

$90$

**Fig. 9**

**Fig. 10**

Fig. 11

Fig. 11A

**Fig. 12**

EP 2 368 134 B1

Fig. 12A

**Fig. 13**

Fig. 13A

EP 2 368 134 B1

46

1390-0
1390-1
1390-2
1390-3
1390-4
1390-5
1390-6
1390-7
1390-8
1390-9
1390-10

$Clkoffset$

$w^1$

$w^2$

$W$

$sel^1$

$sel^2$

$Reset$

$Memo_1$

$Memo_2$

$Out_1$

$Out_2$

$Int\ 1$

$Int\ 2$

$Trf$

**Fig. 13B**

**Fig. 14**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20010033607 A1